# EUROPÄISCHE PATENTANMELDUNG

(11) **EP 4 814 333 A1**
(43) Veröffentlichungstag der Anmeldung: **30.09.2026**
(21) Anmeldenummer: 26168392.4
(22) Anmeldetag: 27.03.2026
(51) Int. Cl.: F16D 13/69, F16D 25/0638

(54) **VORRICHTUNG ZUR REDUZIERUNG VON SCHLEPPMOMENTEN BEI EINEM DREHMOMENTÜBERTRAGUNGSELEMENT SOWIE DREHMOMENTÜBERTRAGUNGSELEMENT**

(30) Priorität: 28.03.2025 DE 102025112172
(71) Anmelder: Universität Rostock, 18055 Rostock (DE)
(72) Erfinder: Prof. Dr. Falkenstein, Jens-Werner, 73434 Aalen (DE); Brauer, Jonas, 18057 Rostock (DE)
(74) Vertreter: Schmid, Wolfgang

(57) **Zusammenfassung**

Eine Vorrichtung zur Reduzierung von Schleppmomenten bei einem wenigstens zwei nebeneinander angeordnete Außenlamellen (2,2a,2b,2c,2d) und/oder wenigstens zwei nebeneinander angeordnete Innenlamellen (3,3a,3b,3c) aufweisenden Drehmomentübertragungselement (1) weist wenigstens ein zwischen zwei nebeneinander angeordneten Außenlamellen (2,2a,2b,2c,2d) und/oder zwischen zwei nebeneinander angeordneten Innenlamellen (3,3a,3b,3c) angeordnetes und diese auseinanderspreizendes Federelement (13) auf. Dem wenigstens einen Federelement (13) ist wenigstens ein Anschlagelement (16) zugeordnet. Das wenigstens eine Anschlagelement (16) ist dazu eingerichtet, einen Abstand zwischen den zwei nebeneinander angeordneten Außenlamellen (2,2a,2b,2c,2d) und/oder zwischen den zwei nebeneinander angeordneten Innenlamellen (3,3a,3b,3c) im geöffneten Zustand des Drehmomentübertragungselements (1) derart zu begrenzen, dass der Abstand wenigstens einem Mindestabstand entspricht.

## Beschreibung

Die Erfindung betrifft eine Vorrichtung zur Reduzierung von Schleppmomenten bei einem wenigstens zwei nebeneinander angeordnete Außenlamellen und/oder wenigstens zwei nebeneinander angeordnete Innenlamellen aufweisenden Drehmomentübertragungselement nach der im Oberbegriff von Anspruch 1 näher definierten Art.

Elektrifizierte Fahrzeuge mit mehr als einer Gangstufe bieten einen Freiheitsgrad für die Betriebspunktwahl eines oder mehrerer Antriebsaggregate und damit die Möglichkeit, Verlustleistungen zu minimieren. Entsprechende Getriebe enthalten typischerweise kraftschlüssige, d.h. schlupfend betreibbare Kupplungen oder Bremsen. Schaltvorgänge sollten aus Komfort- und Fahrsicherheitsgründen zugkraftunterbrechungsfrei erfolgen. Auch in der allgemeinen Antriebstechnik werden für bestimmte Anwendungen entsprechende Lastschaltgetriebe eingesetzt. Ist ein Gang geschaltet, so ist beispielsweise auch eine zugehörige kraftschlüssige Kupplung oder Bremse geschlossen und überträgt ein Drehmoment. Eine oder mehrere weitere kraftschlüssige Kupplungen oder Bremsen sind typischerweise geöffnet und besitzen eine Differenzdrehzahl zwischen Primär- und Sekundärseite. Dabei können Schleppmomente entstehen, bei nasslaufenden Lamellenkupplungen bzw. -bremsen beispielsweise durch die Scherung von zwischen den Lamellen befindlichem Öl. Bei hohen Drehzahlen entsteht das sogenannte Lamellentaumeln, das neben erhöhten Schleppmomenten auch eine Schädigung hervorrufen kann (zum Beispiel durch Wärmeflecken bzw. "Hot-Spots"). Es entstehen hohe Energieverluste, insbesondere bei den typischerweise hohen Drehzahlen in elektrifizierten Antrieben. Als Gegenmaßnahmen werden Federn zur Separierung der Lamellen eingesetzt, um die bei offener Kupplung oder Bremse zwischen den Lamellen auftretenden Schleppmomente zu reduzieren.

Eine gattungsgemäße Vorrichtung und ein entsprechendes Verfahren sind aus der DE 10 2013 209 761 A1 bekannt. Dort wird eine Anordnung zum Beabstanden von Lamellen eines Lamellenschaltelements eines Fahrzeuggetriebes mit mehreren Außenlamellen und mehreren Innenlamellen beschrieben, die alternierend axial nebeneinander angeordnet sind und die beim Betätigen des Lamellenschaltelements in Anlage bringbar sind, wobei zwischen benachbarten Außenlamellen oder zwischen benachbarten Innenlamellen zumindest ein elastisches Distanzelement vorgesehen ist und wobei zumindest eine Innenlamelle oder zumindest eine Außenlamelle eine elastische Wellenform zum Beabstanden von benachbarten Außenlamellen und den Innenlamellen aufweist. Es wird ein elastisches Distanzelement in Form einer Wellfeder vorgeschlagen.

Nachteilig dabei ist, dass die Federkennlinien der einzelnen elastischen Distanzelemente bzw. der einzelnen Wellfedern die Abstände zwischen zwei benachbarten Lamellen bestimmen. Beispielsweise bei fertigungsbedingten Variationen der Federkennlinien der einzelnen Wellfedern oder bei einem unterschiedlichen Setzverhalten der einzelnen Wellfedern variieren auch die Abstände. Zudem kann der Abstand zwischen zwei benachbarten Lamellen über dem Umfang variieren. Dadurch kann es zu Berührungen zwischen den Lamellen und in der Folge zu Schleppmomenten kommen, welche insbesondere bei den hohen Drehzahlen in elektrifizierten Antrieben hohe Energieverluste erzeugen. Des Weiteren wirkt sich eine äußere Störkraft in axialer Richtung, beispielsweise infolge von Reibung zwischen den Zahnflanken der Außenverzahnung einer Außenlamelle und der Innenverzahnung des Außenlamellenträgers, unmittelbar auf die Abstände zwischen zwei benachbarten Lamellen aus. Auch Fliehkräfte können bei einer taumelnden bzw. schief angeordneten Lamelle zusammen mit den abstützenden Kräften in der Verzahnung entsprechende Kraftkomponenten bzw. Störkräfte in axialer Richtung hervorrufen. Es können axiale Schwingungen des gesamten Lamellenpaketes entstehen, da mit den Massen der Lamellen sowie den dazwischenliegenden Federn ein schwingungsfähiges System vorliegt. Mit nicht exakt vorgegebenen Abständen zwischen zwei benachbarten Lamellen, die sich bei axialen Schwingungen zudem zyklisch ändern, ist eine Reduktion von Schleppmomenten zwischen Außen- und Innenlamellen nur bedingt möglich.

Es ist daher Aufgabe der vorliegenden Erfindung, eine Vorrichtung zur Reduzierung von Schleppmomenten bei Drehmomentübertragungselementen, zum Beispiel bei Hybrid- und Elektrofahrzeugen sowie Bahn- und Schiffsantrieben, zu schaffen, mit denen eine Verbesserung der Energieeffizienz erreicht werden kann.

Erfindungsgemäß wird diese Aufgabe durch die in Anspruch 1 genannten Merkmale gelöst.

Die erfindungsgemäße Vorrichtung zur Reduzierung von Schleppmomenten bei einem wenigstens zwei nebeneinander angeordnete Außenlamellen und/oder wenigstens zwei nebeneinander angeordnete Innenlamellen aufweisenden Drehmomentübertragungselement weist wenigstens ein zwischen zwei nebeneinander angeordneten Außenlamellen und/oder zwischen zwei nebeneinander angeordneten Innenlamellen angeordnetes und diese auseinanderspreizendes Federelement auf. Das wenigstens eine Federelement nimmt im geöffneten Zustand des Drehmomentübertragungselements durch direkten Kontakt mit wenigstens einem Anschlagelement und wenigstens einem Abstützelement einer einzelnen der zwei nebeneinander angeordneten Außenlamellen oder einer einzelnen der zwei nebeneinander angeordneten Innenlamellen oder des wenigstens einen Federelements eine geometrisch definierte vorgespannte Länge ein und wirkt dabei mit einer Federkraft auf das wenigstens eine Anschlagelement und das wenigstens eine Abstützelement und gibt somit einen Mindestabstand zwischen den zwei nebeneinander angeordneten Außenlamellen und/oder zwischen den zwei nebeneinander angeordneten Innenlamellen geometrisch definiert vor. Das wenigstens eine Anschlagelement und das wenigstens eine Abstützelement befinden sich dabei auf ein und derselben Außenlamelle oder Innenlamelle bzw. auf dem Federelement.

Erfindungsgemäß wird also wenigstens ein Federelement zur Separation der Lamellen eingesetzt. Dieses wenigstens eine Federelement kann bei geschlossenem Drehmomentübertragungselement mit einer Federkraft auf zwei benachbarte Außenlamellen und/oder Innenlamellen wirken. Im Sinne der vorliegenden Erfindung sind die Angaben "nebeneinander angeordnet" und "benachbart" als gleichwertig bzw. gleichbedeutend anzusehen. Das wenigstens eine Federelement nimmt im geöffneten Zustand des Drehmomentübertragungselements durch direkten Kontakt mit wenigstens einem Anschlagelement und wenigstens einem Abstützelement einer einzelnen der zwei nebeneinander angeordneten Außenlamellen oder einer einzelnen der zwei nebeneinander angeordneten Innenlamellen oder des wenigstens einen Federelements eine geometrisch definierte vorgespannte Länge ein, wirkt dabei mit einer Federkraft auf das wenigstens eine Anschlagelement und das wenigstens eine Abstützelement und gibt somit den Mindestabstand zwischen den zwei nebeneinander angeordneten Außenlamellen und/oder Innenlamellen geometrisch definiert vor. Die Federkraft kann dabei einer Vorspannkraft des wenigstens einen Federelements entsprechen.

Erfindungsgemäß erfolgt die Vorspannung des wenigstens einen Federelements mit Hilfe des wenigstens einen Anschlagelements und des wenigstens einen Abstützelements, welche den Mindestabstand geometrisch definieren. Das wenigstens eine Anschlagelement und das wenigstens eine Abstützelement erzeugen die Vorspannung des wenigstens einen Federelements durch direkten Kontakt mit dem wenigstens einen Federelement. Das wenigstens eine Federelement weist im vorgespannten Zustand eine geometrisch definierte vorgespannte Länge auf, welche den Mindestabstand zwischen den zwei benachbarten Außenlamellen und/oder Innenlamellen geometrisch definiert vorgibt.

Ein Mindestabstand zwischen zwei benachbarten Außenlamellen und/oder Innenlamellen wird dann nicht über eine Federkennlinie eingestellt, sondern über die Geometrie des wenigstens einen Anschlagelements und des wenigstens einen Abstützelements exakt vorgegeben.

Eine äußere Störkraft, welche eine Vorspannkraft des wenigstens einen Federelements nicht überwindet, führt dann nicht zu einer Änderung des Mindestabstandes. Somit bleibt der vorgespannte Zustand des wenigstens einen Federelements auch bei einem Abstand der zwei benachbarten Außenlamellen und/oder Innenlamellen erhalten, der größer als der Mindestabstand ist. Das wenigstens eine Federelement gibt im vorgespannten Zustand den Mindestabstand zwischen den zwei benachbarten Außenlamellen und/oder Innenlamellen geometrisch definiert vor und lässt einen Abstand zwischen den zwei benachbarten Außenlamellen und/oder Innenlamellen zu, der größer ist als der Mindestabstand. Dies erleichtert die Montage und Demontage der Vorrichtung.

In einer sehr vorteilhaften Weiterbildung der Erfindung kann vorgesehen sein, dass das wenigstens eine Federelement in axialer Richtung, insbesondere ausschließlich in axialer Richtung, mit einer Federkraft auf das wenigstens eine Anschlagelement und das wenigstens eine Abstützelement wirkt. Somit wirkt die Federkraft in die Richtung, in der auch die Außenlamellen und/oder Innenlamellen gegenüber dem Außenlamellenträger und/oder Innenlamellenträger verschiebbar sind. Damit ist keine Umlenkung der Federkraft erforderlich, was sich positiv auf die Dimensionierung des Federelements auswirkt.

Eine alternative Lösung der Aufgabe ergibt sich durch die Merkmale des Anspruchs 3.

Die erfindungsgemäße Vorrichtung zur Reduzierung von Schleppmomenten bei einem wenigstens zwei nebeneinander angeordnete Außenlamellen und/oder wenigstens zwei nebeneinander angeordnete Innenlamellen aufweisenden Drehmomentübertragungselement weist wenigstens ein zwischen zwei nebeneinander angeordneten Außenlamellen und/oder zwischen zwei nebeneinander angeordneten Innenlamellen angeordnetes und diese auseinanderspreizendes Federelement auf. Dabei ist dem wenigstens einen Federelement wenigstens ein Anschlagelement zugeordnet, das dazu eingerichtet ist, einen Abstand zwischen den zwei nebeneinander angeordneten Außenlamellen und/oder zwischen den zwei nebeneinander angeordneten Innenlamellen im geöffneten Zustand des Drehmomentübertragungselements derart zu begrenzen, dass der Abstand wenigstens einem Mindestabstand entspricht.

Erfindungsgemäß wird also auch bei dieser Lösung wenigstens ein Federelement zur Separation der Lamellen eingesetzt. Dieses wirkt mit einer Federkraft in axialer Richtung auf zwei benachbarte Innenlamellen und/oder Außenlamellen, nimmt bei offener Kupplung einen vorgespannten Zustand ein und gibt den Mindestabstand zwischen zwei benachbarten Innenlamellen und/oder Außenlamellen geometrisch definiert vor. Erfindungsgemäß erfolgt die Vorspannung des wenigstens einen Federelements mit Hilfe des wenigstens einen Anschlagelements, das den Mindestabstand geometrisch definiert. Das Anschlagelement gibt den Mindestabstand nicht durch direkten Kontakt mit den zwei benachbarten Innenlamellen und/oder Außenlamellen vor, sondern erzeugt die Vorspannung des wenigstens einen Federelements durch Kontakt mit dem wenigstens einen Federelement. Ein Abstand zwischen zwei benachbarten Innenlamellen und/oder Außenlamellen wird dann nicht über eine Federkennlinie eingestellt, sondern über die Geometrie des wenigstens einen Anschlagelements exakt vorgegeben. Eine äußere Störkraft, welche eine Vorspannkraft des wenigstens einen Federelements nicht überwindet, führt dann nicht zu einer Änderung des Mindestabstandes. Somit bleibt der vorgespannte Zustand des wenigstens einen Federelements auch bei einem Abstand der zwei benachbarten Innenlamellen und/oder Außenlamellen erhalten, der größer als der Mindestabstand ist. Solange sich das wenigstens eine Federelement im vorgespannten Zustand befindet, weist dieses keine Federwirkung auf bzw. behält seine vorgespannte Länge bei und es liegt auch kein schwingungsfähiges System vor, wodurch keine axialen Schwingungen des gesamten Lamellenpaketes entstehen können. Damit lassen sich Schleppmomente deutlich reduzieren und Lamellentaumeln zuverlässig verhindern.

Der Kraftfluss des wenigstens einen Federelements verläuft im vorgespannten Zustand ausschließlich über das wenigstens eine Federelement und eine der zwei benachbarten Innenlamellen oder Außenlamellen. Dabei kann die eine der zwei benachbarten Innenlamellen oder Außenlamellen das Anschlagelement beinhalten. Der Kraftfluss kann auch ausschließlich über das Federelement verlaufen, falls das Anschlagelement durch das Federelement selbst gebildet ist.

Die erfindungsgemäße Vorrichtung lässt sich insbesondere bei Hybrid- und Elektrofahrzeugen sowie Bahn- und Schiffsantrieben einsetzen. Da Mehrscheiben- bzw. Lamellenkupplungen sehr verbreitet sind, ist die erfindungsgemäße Vorrichtung jedoch auch in der allgemeinen Antriebstechnik einsetzbar.

In einer vorteilhaften Weiterbildung dieser Vorrichtung kann vorgesehen sein, dass dem wenigstens einen Federelement ein Abstützelement zugeordnet ist, wobei das wenigstens eine Federelement im geöffneten Zustand des Drehmomentübertragungselements durch direkten Kontakt mit dem wenigstens eine Anschlagelement und dem wenigstens einen Abstützelement einer einzelnen der zwei nebeneinander angeordneten Außenlamellen oder einer einzelnen der zwei nebeneinander angeordnete Innenlamellen oder des wenigstens einen Federelements eine geometrisch definierte vorgespannte Länge einnimmt und dabei in axialer Richtung, insbesondere ausschließlich in axialer Richtung, mit einer Federkraft auf das wenigstens eine Anschlagelement und das wenigstens eine Abstützelement wirkt und somit den Mindestabstand zwischen den zwei nebeneinander angeordneten Innenlamellen und/oder Außenlamellen geometrisch definiert vorgibt.

In einer weiteren vorteilhaften Ausgestaltung der erfindungsgemäßen Vorrichtung kann eine einzelne der zwei benachbarten Innenlamellen oder eine einzelne der zwei benachbarten Außenlamellen oder das wenigstens eine Federelement das wenigstens eine Anschlagelement und das wenigstens eine Abstützelement bilden bzw. beinhalten. Dabei werden das wenigstens eine Anschlagelement und das wenigstens eine Abstützelement durch unterschiedliche Bereiche einer einzelnen der zwei benachbarten Innenlamellen oder einer einzelnen der zwei benachbarten Außenlamellen oder des wenigstens einen Federelements gebildet. Dabei liegt ein direkter Kontakt des wenigstens einen Federelements mit dem wenigstens einen Anschlagelement und dem wenigstens einen Abstützelement vor.

Es kann vorgesehen sein, dass das wenigstens eine Federelement im geöffneten Zustand des Drehmomentübertragungselements durch das wenigstens eine Anschlagelement vorgespannt ist und im vorgespannten Zustand den Mindestabstand zwischen den zwei nebeneinander angeordneten Außenlamellen oder zwischen den zwei nebeneinander angeordneten Innenlamellen geometrisch vorgibt. Auf diese Weise ist ein zuverlässiger Betrieb der erfindungsgemäßen Vorrichtung und des dieselbe einsetzenden Drehmomentübertragungselements gewährleistet.

Des Weiteren kann vorgesehen sein, dass das wenigstens eine Anschlagelement für das wenigstens eine Federelement durch wenigstens eine der zwei nebeneinander angeordneten Außenlamellen und/oder wenigstens eine der zwei nebeneinander angeordneten Innenlamellen gebildet ist. Dadurch ergibt sich ein sehr einfacher Aufbau der erfindungsgemäßen Vorrichtung.

Die gewünschte Funktion der erfindungsgemäßen Vorrichtung kann auf sehr einfache und zuverlässige Weise gewährleistet werden, wenn das wenigstens eine Anschlagelement und das wenigstens eine Abstützelement durch eine oder durch jeweils eine Stirnseite wenigstens einer der Außenlamellen und/oder wenigstens einer der Innenlamellen gebildet ist.

In diesem Zusammenhang hat es sich im Hinblick auf eine praxisgerechte Fertigung als vorteilhaft erwiesen, wenn das wenigstens eine Federelement zumindest abschnittsweise entlang beider Stirnseiten von wenigstens einer der Außenlamellen und/oder wenigstens einer der Innenlamellen und/oder durch Ausnehmungen derselben hindurch verläuft.

Wenn in einer weiteren vorteilhaften Ausgestaltung der Erfindung das wenigstens eine Federelement mittels einer Schnappverbindung an einer einzelnen der Außenlamellen und/oder einer einzelnen der Innenlamellen angebracht ist, so ergibt sich eine einfache Montage und eine zuverlässige Funktion der erfindungsgemäßen Vorrichtung.

Eine weitere vorteilhafte Ausführungsform der Erfindung kann darin bestehen, dass das wenigstens eine Federelement so ausgebildet ist, dass eine Federwirkung des Federelements und/oder eine während des Betriebs des Drehmomentübertragungselements wirkende Fliehkraft eine Reibung zwischen dem wenigstens einen Federelement und wenigstens einer der Außenlamellen und/oder wenigstens einer der Innenlamellen im nicht geöffneten Zustand des Drehmomentübertragungselements erzeugt. Damit werden beispielsweise axiale Schwingungen des gesamten Lamellenpaketes während eines Öffnungs- oder Schließvorganges des Drehmomentübertragungselements gedämpft beziehungsweise verhindert.

Des Weiteren kann vorgesehen sein, dass das wenigstens eine Anschlagelement zwischen zwei nebeneinander angeordneten Außenlamellen und/oder zwischen zwei nebeneinander angeordneten Innenlamellen angeordnet ist. Dadurch ergibt sich eine gleichermaßen effektive wie einfach zu realisierende Vorrichtung.

In einer einfach in die Praxis umzusetzenden und hinsichtlich des Platzbedarfs der erfindungsgemäßen Vorrichtung besonders vorteilhaften Ausführungsform der Erfindung kann vorgesehen sein, dass das wenigstens eine Federelement als wenigstens eine, auf einem mit einer der Außenlamellen und/oder einer der Innenlamellen einstückig ausgebildeten Führungsdorn geführte Feder ausgebildet ist, wobei an einem der Außenlamelle und/oder der Innenlamelle abgewandten Ende des Führungsdorns das wenigstens eine Anschlagelement angeordnet ist, wobei das wenigstens eine Anschlagelement sich in einer Ausnehmung der benachbarten Außenlamelle und/oder Innenlamelle befindet, und wobei an einem den Außenlamellen und/oder den Innenlamellen zugewandten Ende des Führungsdorns das wenigstens eine Abstützelement angeordnet ist.

Des Weiteren kann vorgesehen sein, dass das wenigstens eine Anschlagelement durch das wenigstens eine Federelement selbst gebildet ist. Dadurch kann auf zusätzliche Bauteile verzichtet werden. In diesem Zusammenhang können mehrere am Umfang der Innenlamelle oder Außenlamelle symmetrisch zur Rotationsachse angebrachte Federelemente vorgesehen sein, welche dieselben vorgespannten Längen und dieselben Einzel-Vorspannkräfte aufweisen.

Eine zusätzliche Funktion der erfindungsgemäßen Vorrichtung ergibt sich, wenn die geometrisch definierte vorgespannte Länge des wenigstens einen Federelements in seinem vorgespannten Zustand im geöffneten Zustand des Drehmomentübertragungselements eine Ruheposition eines auf die Außenlamellen oder die Innenlamellen wirkenden Aktuators geometrisch vorgibt.

Des Weiteren kann vorgesehen sein, dass der Mindestabstand zwischen den zwei nebeneinander angeordneten Außenlamellen und/oder zwischen den zwei nebeneinander angeordneten Innenlamellen durch Abtragen von Material an dem wenigstens einen Federelement und/oder an dem wenigstens einen Anschlagelement oder durch plastisches Verformen des wenigstens einen Federelements und/oder des wenigstens einen Anschlagelements nach Montage des wenigstens einen Federelements an der Außenlamelle oder der Innenlamelle eingestellt und über dem Umfang angeglichen wird. Dies stellt eine einfache Möglichkeit zum Ausgleichen eventueller fertigungsbedingter Toleranzen dar.

In einer weiteren vorteilhaften Ausgestaltung der erfindungsgemäßen Vorrichtung kann vorgesehen sein, dass das wenigstens eine Federelement bei geschlossenem Drehmomentübertragungselement mit einer Federkraft in axialer Richtung auf zwei benachbarte Innenlamellen und/oder Außenlamellen wirkt. Somit wirkt die Federkraft in die Richtung, in der auch die Innenlamellen und/oder Außenlamellen gegenüber dem Innenlamellenträger und/oder Außenlamellenträger verschiebbar sind. Damit ist keine Umlenkung der Federkraft erforderlich, was sich positiv auf die Dimensionierung des Federelements auswirkt.

In einer weiteren vorteilhaften Ausgestaltung der erfindungsgemäßen Vorrichtung kann vorgesehen sein, dass wenigstens eine der Außenlamellen und/oder Innenlamellen in einer nicht ebenen, insbesondere einer gewellten Form ausgebildet ist, wobei der axiale Abstand der Außenlamellen oder der Innenlamellen voneinander über dem Umfang der Außenlamellen oder der Innenlamellen variiert. Bevorzugt werden mehrere über dem Umfang einer einzelnen der zwei nebeneinander angeordneten Außenlamellen oder einer einzelnen der zwei nebeneinander angeordneten Innenlamellen oder des wenigstens einen Federelements angeordnete Anschlagelemente und/oder Abstützelemente an die Form der nicht ebenen, insbesondere gewellten Lamellen angepasst, sodass die Symmetrie- bzw. Rotationsachsen der zwei nebeneinander angeordneten Außenlamellen oder Innenlamellen im geöffneten Zustand des Drehmomentübertragungselements übereinstimmen. D.h. der geometrisch definierte Mindestabstand zwischen den zwei nebeneinander angeordneten Außenlamellen oder Innenlamellen wird über dem Umfang variiert bzw. an die Form der nicht ebenen, insbesondere gewellten Lamellen angepasst. D.h. die Tatsache, dass es sich um nicht ebene, insbesondere gewellte Außenlamellen oder Innenlamellen handelt, wird durch Vorgabe eines über den Umfang variierenden Mindestabstands zwischen den zwei nebeneinander angeordneten Außenlamellen und/oder zwischen den zwei nebeneinander angeordneten Innenlamellen berücksichtigt. Wenn also bei nicht ebenen, insbesondere gewellten Außenlamellen oder Innenlamellen mehrere Federelemente über den Umfang vorgesehen sind, erzeugen diese unterschiedliche Mindestabstände, beispielsweise über unterschiedliche vorgespannte Längen. Es wird dabei außerdem berücksichtigt, dass sich die Form der nicht ebenen, insbesondere gewellten Lamellen infolge von Elastizitäten bei einem offenen Zustand des Drehmomentübertragungselements gegenüber dem geschlossenen Zustand ändern kann.

Des Weiteren kann in einer vorteilhaften Weiterbildung der Erfindung vorgesehen sein, dass eine zusätzliche Ausgleichsfeder und/oder Reibung in einem auf die Außenlamellen oder die Innenlamellen wirkenden Aktuator den Abstand zwischen den zwei benachbarten Außenlamellen und/oder Innenlamellen auf den Mindestabstand begrenzt. Solange sich das wenigstens eine Federelement im vorgespannten Zustand befindet, weist dieses keine Federwirkung auf bzw. behält seine vorgespannte Länge bei und es liegt auch kein schwingungsfähiges System vor, wodurch keine axialen Schwingungen des gesamten Lamellenpaketes entstehen können. Damit lassen sich Schleppmomente deutlich reduzieren und Lamellentaumeln zuverlässig verhindern. Ohne eine zusätzliche Ausgleichsfeder bzw. ohne Reibungseinflüsse verläuft der Kraftfluss des wenigstens einen Federelements im vorgespannten Zustand ausschließlich über das wenigstens eine Federelement und eine der zwei benachbarten Außenlamellen oder Innenlamellen. Dabei kann die eine der zwei benachbarten Außenlamellen oder Innenlamellen das Abstützelement und das Anschlagelement beinhalten. Der Kraftfluss kann auch ausschließlich über das Federelement verlaufen, falls das Abstützelement und das Anschlagelement durch das Federelement selbst gebildet sind.

In einer weiteren vorteilhaften Ausgestaltung der Erfindung kann vorgesehen sein, dass die geometrisch definierten vorgespannten Längen und/oder auf das wenigstens eine Anschlagelement und das wenigstens eine Abstützelement wirkende Federkräfte und/oder Federkennlinien von Federelementen, die zwischen zwei unterschiedlichen nebeneinander angeordneten Außenlamellen und/oder zwischen zwei unterschiedlichen nebeneinander angeordneten Innenlamellen angeordnet sind, unterschiedliche Werte aufweisen. Dies ermöglicht beispielsweise ein weicheres bzw. ruckärmeres Schließverhalten des Drehmomentübertragungselements und wirkt sich somit positiv auf die Schaltqualität aus.

Ein Drehmomentübertragungselement kann wenigstens zwei nebeneinander angeordnete Außenlamellen und/oder wenigstens zwei nebeneinander angeordnete Innenlamellen und eine erfindungsgemäßen Vorrichtung zur Reduzierung von Schleppmomenten aufweisen.

Das Drehmomentübertragungselement kann einen Aktuator zur Betätigung des Drehmomentübertragungselements aufweisen. Der Aktuator kann dabei die gesamte erforderliche Betätigungskraft aufbringen. Alternativ dazu kann eine Aktuatorfeder die Gesamt-Betätigungskraft aufbringen und somit das Drehmomentübertragungselement schließen, während der Aktuator das Drehmomentübertragungselement gegen die Federkraft der Aktuatorfeder öffnet.

Des Weiteren wird ein Verfahren zur Reduzierung von Schleppmomenten bei einem wenigstens zwei nebeneinander angeordnete Außenlamellen und/oder wenigstens zwei nebeneinander angeordnete Innenlamellen aufweisenden Drehmomentübertragungselement vorgeschlagen, wobei wenigstens ein zwischen zwei nebeneinander angeordneten Außenlamellen und/oder zwei nebeneinander angeordneten Innenlamellen angeordnetes und diese auseinanderspreizendes Federelement vorgesehen ist. Mittels eines dem wenigstens einen Federelement zugeordneten Anschlagelements wird ein Abstand zwischen den zwei nebeneinander angeordneten Außenlamellen und/oder zwischen den zwei nebeneinander angeordneten Innenlamellen im geöffneten Zustand des Drehmomentübertragungselements derart begrenzt, dass der Abstand wenigstens einem Mindestabstand entspricht.

In einer Weiterbildung dieses Verfahrens kann vorgesehen sein, dass das wenigstens eine Federelement im geöffneten Zustand des Drehmomentübertragungselements durch das wenigstens eine Anschlagelement vorgespannt wird und im vorgespannten Zustand den Mindestabstand zwischen den zwei nebeneinander angeordneten Außenlamellen oder zwischen den zwei nebeneinander angeordneten Innenlamellen geometrisch vorgibt. Dies gewährleistet eine zuverlässige Durchführung des Verfahrens.

Um während des Betriebs Unwuchten zu vermeiden, kann bei der Herstellung des Drehmomentübertragungselements vorgesehen sein, dass die Außenlamellen und/oder die Innenlamellen zusammen mit dem wenigstens einen Federelement ausgewuchtet werden.

Bei der Herstellung des Drehmomentübertragungselements kann eine konstante vorgespannte Länge des wenigstens einen Federelements bzw. ein konstanter Mindestabstand über den Umfang der zwei benachbarten Innenlamellen und/oder Außenlamellen zum Beispiel durch Überschleifen oder während eines Fügeprozesses eingestellt werden.

Nachfolgend sind Ausführungsbeispiele der Erfindung anhand der Zeichnung prinzipmäßig dargestellt.

Es zeigt:
- Fig. 1: eine schematische Ansicht eines Drehmomentübertragungselements gemäß dem Stand der Technik;
- Fig. 2: eine perspektivische Ansicht des Drehmomentübertragungselements aus Fig. 1;
- Fig. 3: eine vereinfachte Darstellung einer erfindungsgemäßen Vorrichtung zur Reduzierung von Schleppmomenten bei einem Drehmomentübertragungselement;
- Fig. 4: eine Ausführungsform der erfindungsgemäßen Vorrichtung;
- Fig. 5: eine andere Darstellung der Ausführungsform der Vorrichtung aus Fig. 4;
- Fig. 6: eine perspektivische Darstellung einer weiteren Ausführungsform der erfindungsgemäßen Vorrichtung;
- Fig. 7: eine vergrößerte Darstellung der Vorrichtung aus Fig. 6;
- Fig. 8: eine andere Darstellung der Ausführungsform der Vorrichtung aus den Figuren 6 und 7;
- Fig. 9: eine schematische Darstellung einer weiteren Ausführungsform der erfindungsgemäßen Vorrichtung;
- Fig. 10: einen anderen Zustand der Vorrichtung aus Fig. 9;
- Fig. 11: eine schematische Darstellung einer weiteren Ausführungsform der erfindungsgemäßen Vorrichtung;
- Fig. 12: eine schematische Darstellung einer weiteren Ausführungsform der erfindungsgemäßen Vorrichtung;
- Fig. 13: eine perspektivische Darstellung einer weiteren Ausführungsform der erfindungsgemäßen Vorrichtung;
- Fig. 14: eine vergrößerte Darstellung der Vorrichtung aus Fig. 13;
- Fig. 15: eine andere Darstellung der Ausführungsform der Vorrichtung aus den Figuren 13 und 14;
- Fig. 16: Details der Ausführungsform der Vorrichtung aus den Figuren 13, 14 und 15;
- Fig. 17: einen Schnitt nach der Linie XVII - XVII aus Fig. 16;
- Fig. 18: die Vorrichtung aus Fig. 17 in einem anderen Zustand;
- Fig. 19: eine perspektivische Darstellung einer weiteren Ausführungsform der erfindungsgemäßen Vorrichtung;
- Fig. 20: eine vergrößerte Darstellung der Vorrichtung aus Fig. 19;
- Fig. 21: eine andere Darstellung der Ausführungsform der Vorrichtung aus den Figuren 19 und 20;
- Fig. 22: Details der Ausführungsform der Vorrichtung aus den Figuren 19, 20 und 21;
- Fig. 23: eine perspektivische Darstellung einer weiteren Ausführungsform der erfindungsgemäßen Vorrichtung;
- Fig. 24: eine vergrößerte Darstellung der Vorrichtung aus Fig. 23;
- Fig. 25: eine andere Darstellung der Ausführungsform der Vorrichtung aus den Figuren 23 und 24;
- Fig. 26: Details der Ausführungsform der Vorrichtung aus den Figuren 23, 24 und 25;
- Fig. 27: eine weitere Ausführungsform der erfindungsgemäßen Vorrichtung;
- Fig. 28: einen Schnitt nach der Linie XXVIII - XXVIII aus Fig. 27; und
- Fig. 29: die Vorrichtung aus Fig. 28 in einem anderen Zustand.

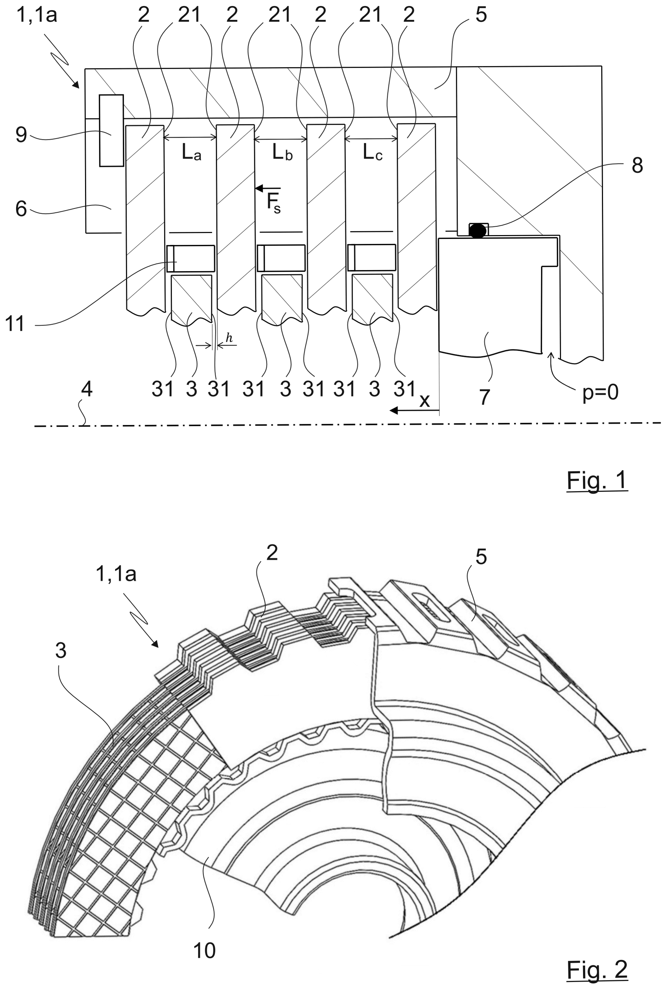

Fig. 1 zeigt schematisch einen Ausschnitt einer ein Drehmomentübertragungselement 1 darstellenden, nasslaufenden Lamellenkupplung 1a nach dem Stand der Technik. Lamellenkupplungen oder -bremsen enthalten typischerweise mehrere Außenlamellen 2 und mehrere Innenlamellen 3, die abwechselnd konzentrisch in axialer Richtung nebeneinander angeordnet sind. Beim Schließen der Lamellenkupplung 1a entsteht Reibung zwischen den Stirnseiten 21 bzw. 31 der Außenlamellen 2 und der Innenlamellen 3, wodurch ein Drehmoment übertragen wird. An den Stirnseiten 21 bzw. 31 können Reibbeläge beinhaltet oder abgebracht sein. Die Komponenten rotieren um eine Rotationsachse 4, die parallel zu der mit "x" dargestellten Axialrichtung verläuft. Die Primärseite der Lamellenkupplung 1a wird durch einen Außenlamellenträger 5 und die Außenlamellen 2 gebildet. Die in Fig. 2 erkennbaren Außenverzahnungen der Außenlamellen 2 kämmen dabei mit einer Innenverzahnung 6 des Außenlamellenträgers 5. Die Außenlamellen 2 sind in Axialrichtung x gegenüber dem Außenlamellenträger 5 verschiebbar, können sich jedoch nicht gegenüber dem Außenlamellenträger 5 verdrehen. Zur Primärseite gehört hier zusätzlich ein Aktuator 7, beispielsweise ein hydraulisch betätigbarer, in Axialrichtung x verschiebbarer Kolben, der eine dynamische Kolbendichtung 8 aufweist, sowie ein Sicherungsring 9, der als Stützteil dient. Alternativ kann der Aktuator 7 auch als Elektromotor, Ein- oder Ausrücklager oder ähnliches ausgebildet sein. Die Komponenten der Primärseite rotieren mit der gemeinsamen Primärdrehzahl. Zur Sekundärseite gehören die Innenlamellen 3 und ein in Fig. 2 dargestellter Innenlamellenträger 10, wobei Innenverzahnungen der Innenlamellen 3 mit einer Außenverzahnung des Innenlamellenträgers 10 kämmen. Die Innenlamellen 3 können sich gegen den Innenlamellenträger 10 in Axialrichtung x verschieben, jedoch nicht verdrehen. Die Innenlamellen 3 und der Innenlamellenträger 10 rotieren mit der gemeinsamen Sekundärdrehzahl. Die zwei mit der Lamellenkupplung 1a zu verbindenden Getriebeteile bzw. Getriebewellen sind jeweils mit dem Außenlamellenträger 5 bzw. dem Innenlamellenträger 10 gekoppelt.

Die in Fig. 1 dargestellte Lamellenkupplung 1a befindet sich in ihrem geöffneten Zustand. Es wirkt kein Öldruck auf den Aktuator 7 (p=0). Der Aktuator 7 befindet sich in der Ausgangsposition am rechten Anschlag, wodurch sich zwischen zwei benachbarten Außenlamellen 2 die Abstände Lₐ, L_{b} und L_{c} ergeben, die typischerweise nicht gleich groß sind. Zwischen einer benachbarten Außenlamelle 2 und Innenlamelle 3 entsteht ein mittleres Lüftspiel h, an beiden Seiten einer Innenlamelle 3 in Summe ein mittleres Gesamt-Lüftspiel 2·h. Somit bewegen sich zwei benachbarte Außenlamellen 2 beim Übergang von einer geschlossenen zu einer offenen Lamellenkupplung 1a im Mittel um das Gesamt-Lüftspiel 2·h in axialer Richtung voneinander weg. In realen Lamellenkupplungen 1a verteilt sich das Lüftspiel h im geöffneten Zustand nicht gleichmäßig, was zu Berührungen zwischen den Lamellen 2 und 3 führen kann. Zwischen Außenlamellen 2 und Innenlamellen 3 können somit Schleppmomente auftreten, die sich infolge von Scherkräften im dazwischen befindlichen Öl oder infolge von Berührungen zwischen Außenlamellen 2 und Innenlamellen 3, insbesondere als Folge eines Taumelns der Lamellen, ergeben. Das Taumeln der Lamellen 2 und 3 kann zu Vibrationen und einer Schädigung der Lamellen 2 und 3 bzw. deren Reibbelägen führen. Um diese Effekte und damit die Schleppmomente zu reduzieren, wird nach dem Stand der Technik vorgeschlagen, Federn bzw. Spreizfedern zur Separierung der Außenlamellen 2 und gegebenenfalls weitere Federn bzw. Spreizfedern zur Separierung der Innenlamellen 3 einzusetzen. Diese können beispielsweise als symmetrisch zur Rotationsachse 4 angeordnete, umlaufende und in axiale Richtung einfedernde Wellfedern 11 ausgeführt sein, welche eine Trennung der Außenlamellen 2 entsprechend Fig. 1 unterstützen.

Nachteilig bei diesem Ansatz ist, dass die Federkennlinien der einzelnen Wellfedern 11 die Abstände Lₐ, L_{b} und L_{c} zwischen zwei benachbarten Lamellen, in diesem Fall den Außenlamellen 2, bestimmen. Beispielsweise bei fertigungsbedingten Variationen der Federkennlinien der einzelnen Wellfedern 11 oder bei einem unterschiedlichen Setzverhalten der einzelnen Wellfedern 11 variieren auch die Abstände Lₐ, L_{b} und L_{c} bzw. nehmen unterschiedliche Werte an. Damit verteilt sich das Lüftspiel h im geöffneten Zustand nicht gleichmäßig, was zu Berührungen zwischen den Lamellen und zu Schleppmomenten führen kann, welche insbesondere bei den hohen Drehzahlen in elektrifizierten Antrieben hohe Energieverluste erzeugen. Zudem sind die Wellfedern 11 in axialer Richtung in Reihe geschaltet. Eine äußere Störkraft Fₛ in axialer Richtung, beispielsweise infolge von Reibung zwischen den Zahnflanken der Außenverzahnung einer Außenlamelle 2 und der Innenverzahnung 6 des Außenlamellenträgers 5, wirkt sich unmittelbar auf die Abstände Lₐ, L_{b} und L_{c} aus bzw. verändert diese. Auch Fliehkräfte können bei einer taumelnden bzw. schief angeordneten Lamelle zusammen mit den abstützenden Kräften in der Verzahnung entsprechende Kraftkomponenten bzw. Störkräfte in axialer Richtung hervorrufen. Es können axiale Schwingungen des gesamten Lamellenpaketes entstehen, da mit den Massen der Außenlamellen 2 sowie den Federwirkungen der dazwischenliegenden Wellfedern 11 ein schwingungsfähiges System vorliegt. Mit nicht exakt vorgegebenen Abständen Lₐ, L_{b} und L_{c}, die sich bei axialen Schwingungen zudem zyklisch ändern, ist eine Reduktion von Schleppmomenten zwischen den Außenlamellen 2 und den Innenlamellen 3 nur bedingt möglich.

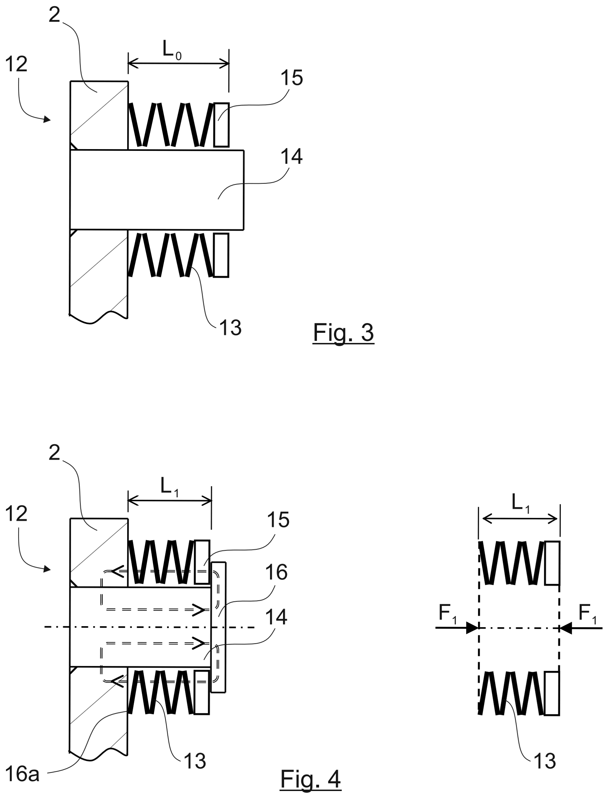

Fig. 3 zeigt eine Vorrichtung 12 zur Reduzierung von Schleppmomenten bei dem in Fig. 3 nicht in seiner Gesamtheit dargestellten Drehmomentübertragungselement 1. Die Vorrichtung 12 weist wenigstens ein Federelement 13 auf, wobei zur Veranschaulichung ein unvollständiges Einzel-Federpaket, noch ohne Vorspannung bzw. noch ohne ein zu einem späteren Zeitpunkt erläutertes Anschlagelement dargestellt ist. Im dargestellten Ausführungsbeispiel sind konkret mehrere, das Federelement 13 bzw. das Einzel-Federpaket bildende Tellerfedern auf einem Führungsdorn 14 angeordnet, der durch eine Schweißverbindung, durch Umformen oder ähnliches fest mit einer ersten Außenlamelle 2 des Drehmomentübertragungselements 1 verbunden ist. Alternativ zu rotationssymmetrischen Tellerfedern sind auch geschlitzte oder kleeblattförmige Tellerfedern bzw. Membranfedern, zylindrische Schraubendruckfedern oder Wellfedern bzw. gewellte oder gewölbte Federscheiben zur Bildung des Federelements 13 möglich. Auch konische Druckfedern kommen aufgrund des geringen axialen Bauraumes in Frage. Es können auch Kombinationen dieser Federarten zum Einsatz kommen. Das Federelement 13 weist zusammen mit einer beinhalteten Scheibe 15 bzw. einem Federteller die ungespannte Länge L₀ auf.

Die Fig. 4 zeigt das Federelement 13 wiederum in Form eines vorgespannten Einzel-Federpakets aus Fig. 3, welches mit Hilfe des Führungsdorns 14, der in diesem Fall ein Anschlagelement 16 aufweist, auf die vorgespannte Länge L₁ verkürzt ist und dabei die Einzel-Vorspannkraft F₁ erzeugt, welche auf das Anschlagelement 16 des Führungsdorns 14 und das Abstützelement 16a wirkt bzw. zwischen der Scheibe 15 und dem Anschlagelement 16 des Führungsdorns 14 entsteht. Das Anschlagelement 16 und das Abstützelement 16a geben die vorgespannte Länge L₁ geometrisch vor. Die vorgespannte Länge L₁ gibt den Mindestabstand zwischen zwei benachbarten Innenlamellen 3 und/oder Außenlamellen 2 vor und stellt an beiden Seiten der dazwischenliegenden Außenlamelle 2 bzw. Innenlamelle 3 in Summe mindestens ein Gesamt-Lüftspiel 2·h ein. Der Führungsdorn 14 ist fest mit der ersten Außenlamelle 2 verbunden, zum Beispiel durch Schweißen, Umformen, Verlöten oder Verkleben, oder einstückig mit derselben ausgebildet.

Dem Federelement 13, im dargestellten Ausführungsbeispiel dem Einzel-Federpaket, sind somit ein Anschlagelement 16 und ein Abstützelement 16a zugeordnet. Die Einzel-Vorspannkraft F₁ des Federelements 13 wirkt auf das Anschlagelement 16 und das Abstützelement 16a, der Kraftfluss verläuft im vorgespannten Zustand ausschließlich über das Federelement 13 und die erste Außenlamelle 2, welche den Führungsdorn 14 mit dem Anschlagelement 16 und das Abstützelement 16a beinhaltet. Das Abstützelement 16a wird hier durch eine Stirnseite der ersten Außenlamelle 2 gebildet.

Im vorgespannten Zustand besitzt das wenigstens eine Federelement 13 bzw. die durch sämtliche Federelemente 13 gebildete Federeinrichtung eine Gesamt-Vorspannkraft F_{1,ges} bei einer vorgespannten Länge L₁, welche kleiner ist als eine ungespannte Länge L₀. Eine konzentrisch wirkende äußere Störkraft F_{S}, die kleiner ist als die Gesamt-Vorspannkraft F_{1,ges}, kann die Länge des wenigstens einen Federelements 13 gegenüber der vorgespannten Länge L₁ nicht verringern. Auch eine konzentrisch wirkende äußere Gesamt-Betätigungskraft F_{B,ges}, die kleiner ist als die Gesamt-Vorspannkraft F_{1,ges}, kann die Länge des wenigstens einen Federelements 13 gegenüber der vorgespannten Länge L₁ nicht verringern.

Vorzugsweise sind mehrere Einzel-Federpakete bzw. Federelemente 13 gemäß Fig. 4 stirnseitig an der ersten Außenlamelle 2 angeordnet, wobei die Einzel-Federpakete aus Fig. 4 über den Umfang der ersten Außenlamelle 2 symmetrisch verteilt sind. Die Einzel-Vorspannkräfte F₁ der Einzel-Federpakete bzw. der Federelemente 13 summieren sich dann zu der Gesamt-Vorspannkraft F_{1,ges} aller Federelemente 13 an der ersten Außenlamelle 2 auf. Vorzugsweise sind die Federelemente 13 stirnseitig an den in Fig. 4 nicht dargestellten Zähnen der ersten Außenlamelle 2 angeordnet. Besonders bevorzugt ist es, die Federelemente 13 teilweise oder vollständig innerhalb von Zahnlücken der Innenverzahnung 6 bzw. in Verzahnungstaschen des Außenlamellenträgers 5 anzuordnen. Damit ergibt sich kein zusätzlicher Bauraumbedarf. Die vorgespannte Länge L₁ gibt dann den Mindestabstand zu einer zweiten Außenlamelle 2, d.h. den Mindestabstand zwischen zwei benachbarten Außenlamellen 2 vor. Eine äußere Störkraft F_{S}, welche die Einzel-Vorspannkraft F₁ des Federelements 13 bzw. die Gesamt-Vorspannkraft F_{1,ges} aller Federelemente 13 an der ersten Außenlamelle 2, je nach Angriffspunkt der äußeren Störkraft F_{S} an der ersten Außenlamelle 2, nicht überwindet, kann den Abstand zu der zweiten, benachbarten Außenlamelle 2 nicht verringern bzw. der Abstand entspricht weiterhin wenigstens dem Mindestabstand.

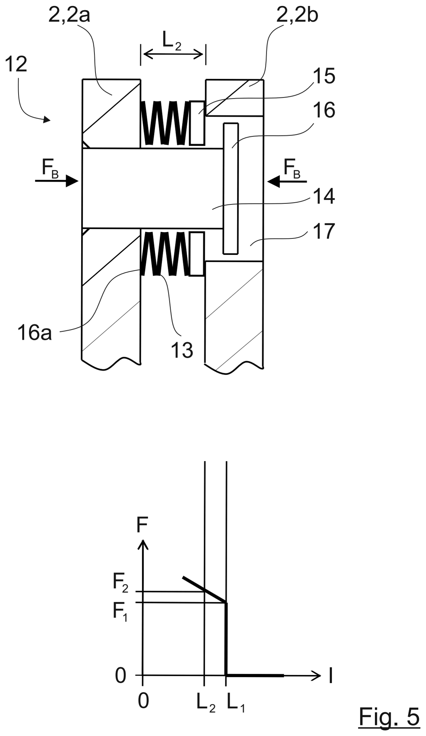

Fig. 5 zeigt die erste Außenlamelle 2 mit dem wiederum in Form des Einzel-Federpakets dargestellten Federelement 13 und eine zweite, benachbarte Außenlamelle 2. Das Drehmomentübertragungselement 1 hat den geöffneten bzw. offenen Zustand von Fig. 4 verlassen, der Abstand der beiden Außenlamellen 2 hat sich gegenüber dem offenen Zustand des Drehmomentübertragungselements 1 verringert. D.h. der Abstand der beiden Außenlamellen 2 hat sich gegenüber dem Mindestabstand, welcher im dargestellten Ausführungsbeispiel der vorgespannten Länge L₁ entspricht, verringert. Eine auf das Federelement 13 wirkende, anteilige äußere Einzel-Betätigungskraft F_{B} ist größer als die Einzel-Vorspannkraft F₁ des Federelements 13, die beiden Außenlamellen 2 weisen einen Abstand auf, welcher einer gespannten Länge L₂ des Federelements 13 entspricht. Das Federelement 13 erzeugt eine Kraft F₂, welche mit der äußeren Einzel-Betätigungskraft F_{B} im Gleichgewicht steht. D.h. ist eine Einzel-Betätigungskraft F_{B} vorhanden, deren Wert oberhalb der Einzel-Vorspannkraft F₁ liegt, so verringert sich der Abstand der beiden Außenlamellen 2 gegenüber dem Mindestabstand, welcher im dargestellten Ausführungsbeispiel der vorgespannten Länge L₁ entspricht.

Wird die Einzel-Betätigungskraft F_{B} auf einen Wert reduziert, der unterhalb der Einzel-Vorspannkraft F₁ des Federelements 13 liegt, so erhöht sich der Abstand der beiden Außenlamellen 2 auf die vorgespannte Länge L₁, welche geometrisch von dem Anschlagelement 16 und dem Abstützelement 16a vorgegeben ist. Dies entspricht einem offenen Zustand des Drehmomentübertragungselements 1. Der Abstand L₁ zwischen der ersten und der zweiten Außenlamelle 2 wird dann geometrisch exakt vorgegeben, geringe Änderungen der Einzel-Betätigungskraft F_{B} oder einer äußeren Störkraft F_{S} haben keinen Einfluss. D.h. ist eine Einzel-Betätigungskraft F_{B} vorhanden, deren Wert unterhalb der Einzel-Vorspannkraft F₁ liegt, so entspricht der Abstand der beiden Außenlamellen 2 dem Mindestabstand, welcher im dargestellten Ausführungsbeispiel der vorgespannten Länge L₁ entspricht.

Fällt die Einzel-Betätigungskraft F_{B} weg bzw. nimmt diese den Wert Null an, so kann sich der Abstand zwischen der ersten und der zweiten Außenlamelle 2 auf einen Wert größer als die vorgespannte Länge L₁ erhöhen, welche im Ausführungsbeispiel dem Mindestabstand entspricht. Dies entspricht einem offenen Zustand des Drehmomentübertragungselements 1. Dabei bleiben infolge des Anschlagelements 16 und des Abstützelements 16a die Vorspannung und die vorgespannte Länge L₁ des Federelements 13 weiterhin erhalten. Die Einzel-Vorspannkraft F₁ des Federelements 13 wirkt dann gänzlich auf das Anschlagelement 16 und das Abstützelement 16a. D.h. fällt die Einzel-Betätigungskraft F_{B} weg bzw. ist nicht vorhanden, so kann sich der Abstand der beiden Außenlamellen 2 gegenüber dem Mindestabstand, welcher im dargestellten Ausführungsbeispiel der vorgespannten Länge L₁ entspricht, erhöhen.

Bevorzugt werden die vorgespannten Längen L₁ der mehreren Federelemente 13 an einer der Außenlamellen 2, im vorliegenden Fall der ersten Außenlamelle 2, während der Fertigung auf denselben Wert eingestellt, zum Beispiel beim Fügeprozess des Führungsdorns 14 in die Außenlamelle 2. Bevorzugt ragen die mehreren Federelemente 13 und/oder zugehörige Elemente, wie z.B. die Führungsdorne 14 bzw. die Anschlagelemente 16 in Ausnehmungen 17 der benachbarten, zweiten Außenlamelle 2, was den erforderlichen Bauraum reduziert.

Bevorzugt erfolgt durch Kontakt der Federelemente 13 und/oder der Führungsdorne 14 bzw. Anschlagelemente 16 der ersten Außenlamelle 2 mit den Ausnehmungen 17 der benachbarten, zweiten Außenlamelle 2 eine Zentrierung bzw. Positionierung der beiden Außenlamellen 2 zueinander. Dies bringt insbesondere im geöffneten bzw. offenen Zustand des Drehmomentübertragungselements 1 Vorteile, da hier Zahnkräfte zwischen den Zähnen der Außenlamellen 2 und der Innenverzahnung 6 des Außenlamellenträgers 5 fehlen und damit auch deren Zentrierwirkung im Falle einer Flankenzentrierung mit typischerweise trapezförmigen Zähnen.

Im unteren Bereich von Fig. 5 ist die Federkennlinie bzw. die zwischen den beiden Außenlamellen 2 wirkende Federkraft F des Federelements 13 über dem Abstand I der beiden Außenlamellen 2 aufgetragen. Bei einem Abstand I > L₁ ist die Federkraft F=0. Bei einem Abstand I < L₁ ist die Federkraft F größer als die Einzel-Vorspannkraft F₁, es gilt F > F₁.

Bevorzugt werden die Einzel-Vorspannkräfte F₁ und/oder die Federkennlinien der mehreren, die Federeinrichtung bildenden Federelemente 13 an einer der Außenlamellen 2, hier der ersten Außenlamelle 2, während der Fertigung auf dieselben Werte eingestellt, zum Beispiel durch Auswahl geeigneter Exemplare von Tellerfedern als Federelement 13.

Bevorzugt erfolgt ein Auswuchten der jeweiligen Außenlamellen 2 zusammen mit den Federelementen 13 während der Fertigung, um Unwuchten zu minimieren.

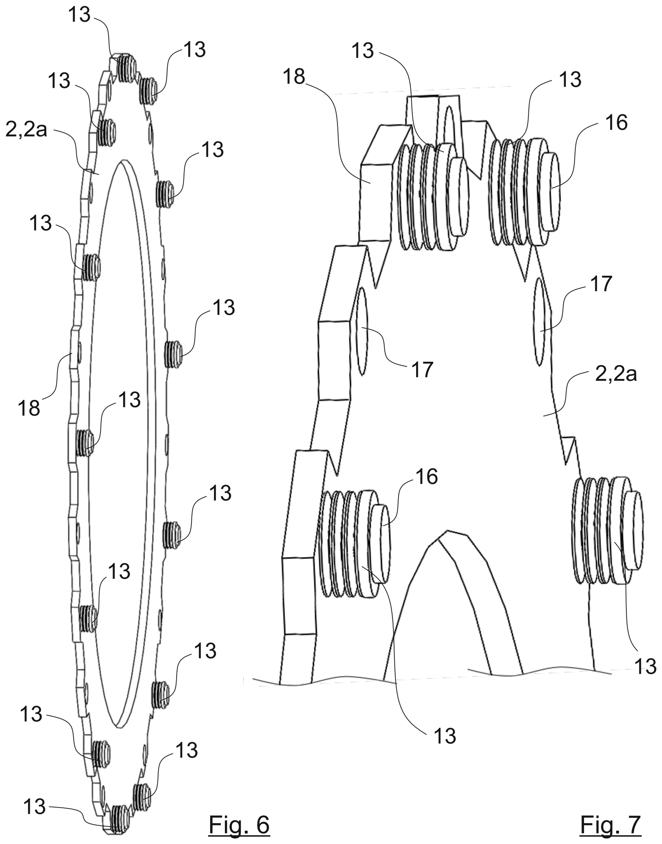

Die Figuren 6, 7 und 8 zeigen in verschiedenen Ansichten die erste Außenlamelle 2 mit mehreren, vorzugsweise symmetrisch über den Umfang und stirnseitig an Zähnen 18 derselben angeordneten, wiederum als Einzel-Federpakete ausgebildeten Federelementen 13 mit Anschlagelementen 16 und nicht sichtbaren Abstützelementen 16a sowie Ausnehmungen 17. Durch sämtliche Federelemente 13 an einer der Außenlamellen 2 wird hierbei eine Federeinrichtung gebildet. Die Federelemente 13 und die Ausnehmungen 17 wechseln sich im vorliegenden Fall ab, wobei auch andere Muster möglich sind, beispielsweise ein Federelement 13 an jedem dritten Zahn 18. In die Ausnehmungen 17 ragen die Federelemente 13 bzw. zugehörige Elemente, wie beispielsweise die Führungsdorne 14 bzw. die Anschlagelemente 16, einer benachbarten Außenlamelle 2 hinein.

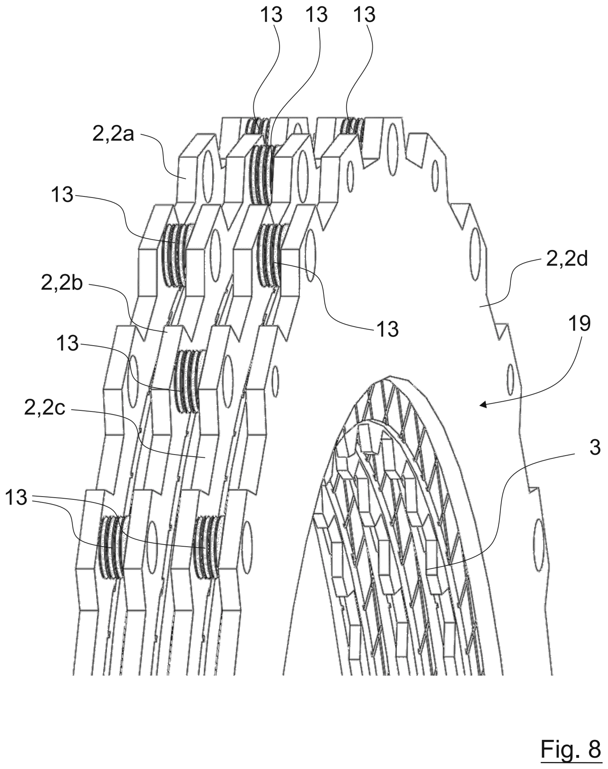

Fig. 8 zeigt zudem ein aus mehreren Außenlamellen 2a, 2b, 2c und 2d und dazwischen angeordneten Innenlamellen 3 gebildetes Lamellenpaket 19, wobei die letzte, rechts liegende Außenlamelle 2 bzw. Endlamelle 2d kein Federelement 13 aufweist.

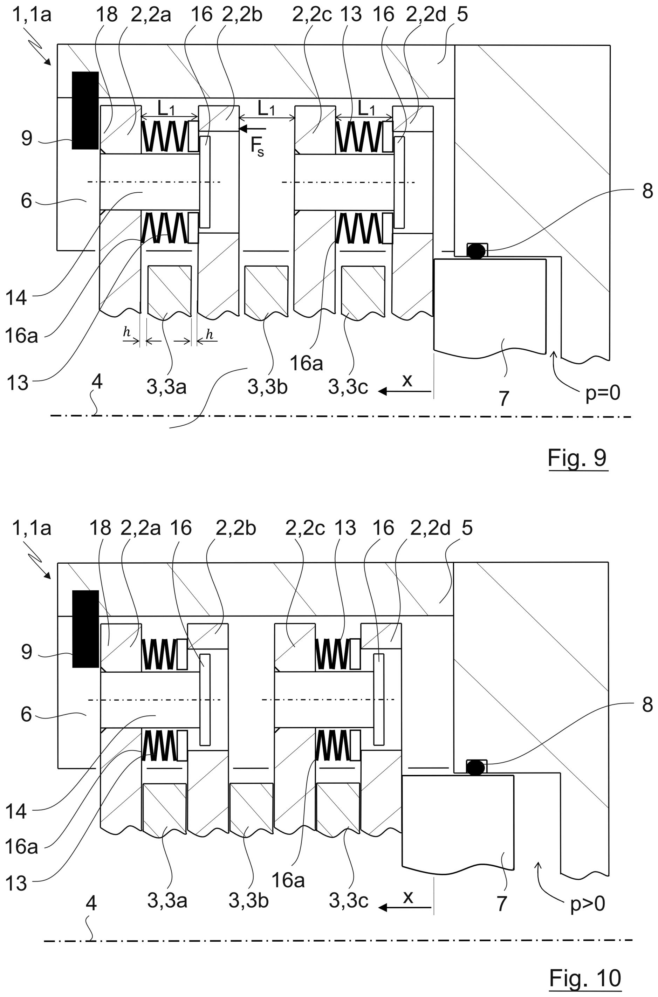

Fig. 9 zeigt ein wiederum als Lamellenkupplung 1a ausgebildetes, um seine Rotationsachse 4 rotierendes Drehmomentübertragungselement 1 mit mehreren Außenlamellen 2 gemäß der Figuren 6, 7 und 8. Der Abstand der Lamellenkupplung 1a zur Rotationsachse 4 ist nicht maßstäblich dargestellt. Die Außenlamellen 2a und 2c enthalten stirnseitig an ihren Zähnen 18 angeordnete, wiederum als Einzel-Federpakete ausgebildete Federelemente 13 entsprechend Fig. 4. Die Außenlamelle 2b enthält ebenfalls stirnseitig an ihren Zähnen 18 angeordnete Federelemente 13 entsprechend Fig. 4, diese sind jedoch um mindestens einen Zahn 18 gegenüber den Federelementen 13 der Außenlamellen 2a und 2c versetzt und in Fig. 9 nicht sichtbar. Das Drehmomentübertragungselement 1 wird mittels eines mitrotierenden, den Aktuator 7 bildenden Kolbens geschlossen, welcher sich bei Beaufschlagung mit einem Betätigungsdruck p in Axialrichtung x nach links bewegt und Reibkontakt zwischen den Außenlamellen 2 und den Innenlamellen 3 herstellt. In Fig. 9 ist der offene Zustand des Drehmomentübertragungselements 1 bei einem geringen oder nicht vorhandenen Betätigungsdruck p=0 dargestellt. Die Außenlamellen 2 besitzen dieselben Abstände L₁, welche den vorgespannten Längen L₁ der Federelemente 13 entsprechen und sich auch bei einer äußeren Störkraft F_{S}, welche die Vorspannkraft F₁ des einzelnen Federelements 13 bzw. die Gesamt-Vorspannkraft F_{1,ges} aller einzelnen Federelemente 13 an einer Außenlamelle 2 nicht überwindet, nicht verringern. Die Mindestabstände der Außenlamellen 2, welche im dargestellten Ausführungsbeispiel den vorgespannten Längen L₁ entsprechen, werden somit durch die Anschlagelemente 16 der Führungsdorne 14 und die Abstützelemente 16a geometrisch vorgegeben. Dabei wirken die Federkräfte der Federelemente 13 in axialer Richtung, insbesondere ausschließlich in axialer Richtung, mit einer Federkraft oder Gesamt-Vorspannkraft F_{1,ges} auf die Anschlagelemente 16 und die Abstützelemente 16a. Fertigungsbedingte Variationen der Federkennlinien und unterschiedliches Setzverhalten der Federelemente 13 haben keinen Einfluss auf die Mindestabstände der Außenlamellen 2. Es können auch keine axialen Schwingungen des gesamten Lamellenpaketes 19 entstehen, da mit der geometrischen Vorgabe der Mindestabstände der Außenlamellen 2 durch die Anschlagelemente 16 der Führungsdorne 14 und die Abstützelemente 16a kein schwingungsfähiges System vorliegt. Ein schwingungsfähiges System würde Federeigenschaften erfordern, die nicht vorhanden sind. Die Federelemente 13 dienen hier zudem als Kolbenrückstellfedern, d.h. beim Übergang vom geschlossenen Zustand in den offenen Zustand der Lamellenkupplung 1a bzw. beim Abbau eines Betätigungsdruckes p bewegen die Federelemente 13 den Aktuator 7 gegen die Reibung der Kolbendichtung 8 so weit nach rechts (in Axialrichtung x, entgegen der eingezeichneten positiven Richtung), bis die Anschlagelemente 16 der Federelemente 13 wirksam werden bzw. die vorgespannte Länge L₁ der Federelemente 13 erreicht ist. Infolge der Reibung der Kolbendichtung 8 bleibt der Kolben bzw. Aktuator 7 in der zugehörigen Position und bewegt sich nicht weiter nach rechts bis an seinen Anschlag. Von Vorteil ist hierbei, dass die Abstände der Außenlamellen 2 nicht größer werden können als der Wert L₁, welcher die vorgespannte Länge L₁ der Federelemente 13 darstellt. D.h. eine Erhöhung des Abstandes zwischen zwei benachbarten Außenlamellen 2 gegenüber dem Mindestabstand, welcher durch die vorgespannte Länge L₁ der Federelemente 13 vorgegeben ist, wird verhindert. Dies vermeidet ein Verkippen bzw. Taumeln der Außenlamellen 2 und die Außenlamellen 2 besitzen einen guten Planlauf relativ zur Rotationsachse 4, was die Schleppmomente deutlich reduziert. Die Federelemente 13 bzw. deren Anschlagelemente 16 und Abstützelemente 16a bzw. deren geometrisch definierte vorgespannte Längen L₁ geben somit die Position bzw. Ruheposition des Kolbens bzw. Aktuators 7 im offenen Zustand der Lamellenkupplung 1a vor. Zwischen einer Innenlamelle 3 und zwei benachbarten Außenlamellen 2 entsteht in Summe ein gesamtes Lüftspiel der Größe 2·h, welches sich aus dem Abstand L₁ der benachbarten Außenlamellen 2 und der Dicke der Innenlamelle 3 ergibt.

Fig. 10 zeigt das Drehmomentübertragungselement 1 aus Fig. 9 im geschlossenen Zustand. Der mitrotierende Kolben als Aktuator 7 hat sich infolge der Beaufschlagung mit einem Betätigungsdruck p>0 nach links bewegt und Reibkontakt zwischen den Außenlamellen 2 und den Innenlamellen 3 hergestellt. Gegenüber dem offenen Zustand des Drehmomentübertragungselements 1 aus Fig. 9 hat sich im geschlossenen Zustand der Abstand zweier benachbarter Außenlamellen 2 um das Gesamt-Lüftspiel der Größe 2·h verringert. D.h. die Federelemente 13 haben sich um das Gesamt-Lüftspiel 2·h gegenüber der vorgespannten Länge L₁ verkürzt. Somit wirken bei geschlossenem Drehmomentübertragungselement 1 die Federkräfte der Federelemente 13 in axialer Richtung auf zwei benachbarte Außenlamellen 2.

Bevorzugt ist der Wert der Vorspannkraft F₁ des einzelnen Federelements 13 bzw. der Wert der Gesamt-Vorspannkraft F_{1,ges} aller einzelnen Federelemente 13 an einer Außenlamelle 2 in einer Steuereinrichtung hinterlegt bzw. abgespeichert. Es kann auch ein Wert für den Betätigungsdruck p in der Steuereinrichtung hinterlegt sein, bei dem die daraus entstehende Gesamt-Betätigungskraft F_{B,ges} der Gesamt-Vorspannkraft F_{1,ges} aller einzelnen Federelemente 13 an einer Außenlamelle 2 entspricht. Unter Berücksichtigung dieses Wertes lassen sich die Steuerungsalgorithmen für das Drehmomentübertragungselement 1 verbessern, insbesondere bei Öffnungs- und Schließvorgängen.

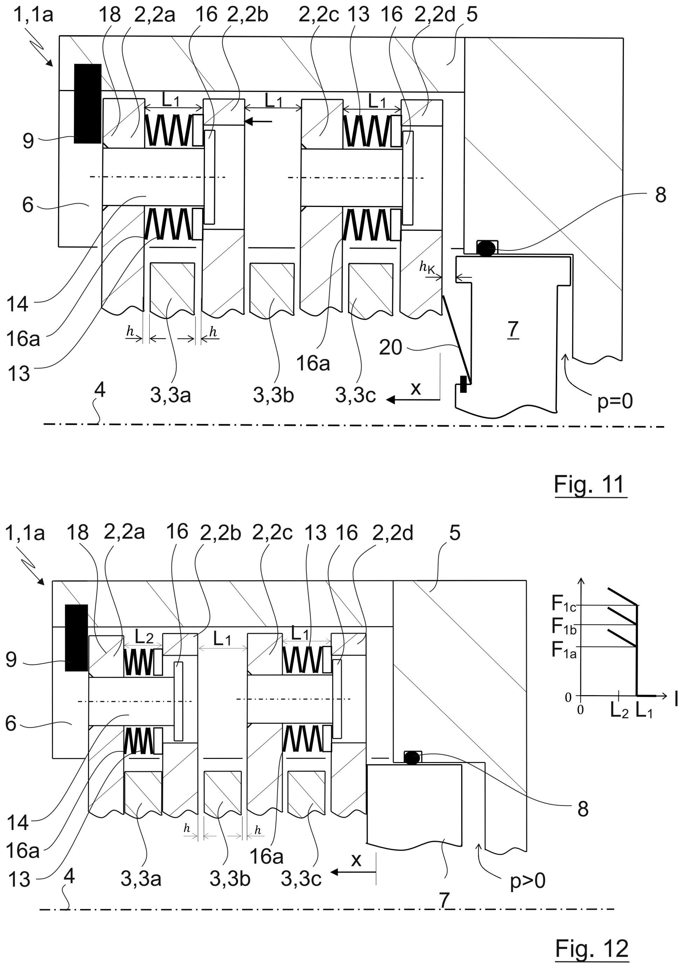

Fig. 11 zeigt eine andere Variante des wiederum als Lamellenkupplung 1a ausgebildeten Drehmomentübertragungselements 1 aus Fig. 9; dargestellt ist der offene Zustand des Drehmomentübertragungselements 1. Bei einem geringem oder nicht vorhandenem Betätigungsdruck p=0 bewegt eine nicht dargestellte Kolbenrückstellfeder den auch hier als Kolben ausgebildeten Aktuator 7 nach rechts bis an den Anschlag desselben. Eine entsprechende Kolbenrückstellfeder kann als Tellerfeder oder mit mehreren Schraubendruckfedern realisiert sein. In der in Fig. 11 dargestellten Position besitzen zwei benachbarte Außenlamellen dieselben Abstände L₁, welche der vorgespannten Länge L₁ der Federelemente 13 und somit dem Mindestabstand entsprechen. Dann entsteht ein Lüftspiel h_{K} zwischen dem Kolben und der Außenlamelle 2. Ohne weitere Maßnahmen kann dies zu einer Schiefstellung bzw. zu einem Taumeln der Außenlamellen 2 führen. Im dargestellten Ausführungsbeispiel wird daher eine zusätzliche Ausgleichsfeder 20 installiert, welche dieselben Abstände L₁ zwischen zwei benachbarten Außenlamellen 2 vorgibt, indem sie die Außenlamellen 2 nach links drückt. Die Abstände der Außenlamellen 2 können somit nicht größer werden als der Wert L₁, welcher dem Mindestabstand entspricht. In Fig. 11 ist die Ausgleichsfeder 20 beispielhaft als Tellerfeder realisiert, es sind jedoch auch andere Federarten möglich, wie beispielsweise geschlitzte oder kleeblattförmige Tellerfedern bzw. Membranfedern, zylindrische Schraubendruckfedern und Wellfedern bzw. gewellte oder gewölbte Federscheiben und/oder konische Druckfedern. In dem in Fig. 11 dargestellten Zustand der Ausgleichsfeder 20 erzeugt diese eine Federkraft F_{A}, welche die Gesamt-Vorspannkraft F_{1,ges} aller Federelemente 13 an einer Außenlamelle 2 nicht überwindet. Die Ausgleichsfeder 20 positioniert somit die Außenlamellen 2 in denselben Abständen L₁, wobei die Federelemente 13 ihre vorgespannte Längen L₁ einnehmen. Die Positionen der Außenlamellen 2 werden somit durch die geometrisch definierte vorgespannte Länge L₁ der Federelemente 13 bzw. durch die Anschlagelemente 16 der Führungsdorne 14 und die Abstützelemente 16a geometrisch und damit exakt vorgegeben. Die Ausgleichsfeder 20 und/oder Reibung verhindert eine Erhöhung des Abstandes zwischen zwei benachbarten Außenlamellen 2 gegenüber dem Mindestabstand, welcher durch die geometrisch definierte vorgespannte Länge L₁ der Federelemente 13 vorgegeben ist. Dabei ist die Ausgleichsfeder 20 ebenfalls vorgespannt. Die Anschlagelemente 16 und die Abstützelemente 16a, welche die geometrisch definierten vorgespannten Längen L₁ der Federelemente 13 vorgeben, geben somit auch die vorgespannte Länge der Ausgleichsfeder 20 geometrisch vor. Damit liegen geometrisch exakte Vorgaben für die einzelnen Komponenten vor, beispielsweise auch bei fertigungsbedingten Variationen von Federkennlinie und Setzverhalten der Ausgleichsfeder 20.

In einer Weiterbildung wirkt die Ausgleichsfeder 20 zusätzlich als Anlagefeder, um den Impuls beim Schließen der Lamellenkupplung 1a zu dämpfen. Während des Schließvorganges bewegt sich der hier als Kolben ausgebildete Aktuator 7 in Axialrichtung x nach links. Dadurch wird die Ausgleichsfeder 20 weiter gespannt und erzeugt dann eine erhöhte Federkraft F_{A}, welche die Gesamt-Vorspannkraft F_{1,ges} aller Federelemente 13 an einer Außenlamelle 2 überwindet und schlussendlich Reibkontakt zwischen den Außenlamellen 2 und den Innenlamellen 3 herstellt. Der Aktuator 7 wirkt dabei über die nachgiebige Ausgleichsfeder 20 auf die Außenlamellen 2 und die Innenlamellen 3, was den Schließvorgang weicher gestaltet und eine bessere Einstellbarkeit des zwischen dem Außenlamellenträger 5 und dem Innenlamellenträger 10 übertragenen Drehmomentes durch den Aktuator 7 ermöglicht.

In einer Weiterbildung des Drehmomentübertragungselements 1 weisen die geometrisch definierten vorgespannten Längen L₁ der Federelemente 13 einer der Außenlamellen 2, die Einzel-Vorspannkräfte F₁ der Federelemente 13 der Außenlamelle 2 und/oder die Federkennlinien der Federelemente 13 einer Außenlamelle 2 an verschiedenen Außenlamellen 2 unterschiedliche Werte auf. Die Summe der Einzel-Vorspannkräfte F₁ aller Federelemente 13 einer Außenlamelle 2 ergeben eine Gesamt-Vorspannkraft F_{1,ges} sämtlicher Federelemente 13 dieser Außenlamelle 2. Die Federkennlinien aller Federelemente 13 einer der Außenlamellen 2 ergeben zusammen eine Gesamt-Federkennlinie dieser Außenlamelle 2. Somit weisen auch die Gesamt-Vorspannkraft F_{1,ges} und/oder die Gesamt-Federkennlinie verschiedener Außenlamellen 2 unterschiedliche Werte auf.

Bevorzugt besitzen die Einzel-Vorspannkräfte F₁ der Federelemente 13 einer Außenlamelle 2 bzw. die Gesamt-Vorspannkraft F_{1,ges} aller Federelemente 13 dieser Außenlamelle 2 bzw. die Steigungen der Federkennlinien einer Außenlamelle 2, welche in axialer Richtung in der Nähe des Kolbens bzw. Aktuators 7 liegt, höhere Werte als die einer weiter von dem Aktuator 7 entfernt liegenden Außenlamelle 2. Bevorzugt nehmen die Einzel-Vorspannkräfte F₁ bzw. die Gesamt-Vorspannkraft F_{1,ges} bzw. die Steigungen der Federkennlinien mit größer werdendem Abstand der jeweiligen Außenlamelle 2 zum Kolben bzw. Aktuator 7 ab. Des Weiteren variieren die vorgespannten Längen L₁ des wenigstens einen Federelements 13 bzw. die Mindestabstände zwischen zwei benachbarten Innenlamellen 3 und/oder Außenlamellen 2 bzw. die Einzel-Vorspannkräfte F₁ bzw. die Gesamt-Vorspannkräfte F_{1,ges} bzw. die Federkennlinien mit dem Abstand der zwei benachbarten Innenlamellen 3 und/oder Außenlamellen 2 zum Aktuator 7.

Fig. 12 zeigt eine teilweise geschlossene bzw. im Schlupf befindliche Lamellenkupplung 1a. Die Vorspannkraft F_{1,a} der Federelemente 13 an der Außenlamelle 2a ist bereits überwunden. Die Innenlamelle 3a befindet sich in Reibschluss mit den Außenlamellen 2a und 2b, wodurch ein Drehmoment zwischen dem Außenlamellenträger 5 und dem Innenlamellenträger 10 übertragen wird. Die Vorspannkraft F_{1,b} der Federelemente 13 an der Außenlamelle 2b, die in Fig. 12 nicht sichtbar sind, ist noch nicht überwunden. Die Innenlamelle 3b befindet sich somit nicht in Reibschluss mit den Außenlamellen 2b und 2c, es wird kein Drehmoment übertragen. Die zwei benachbarten Außenlamellen 2b und 2c halten den Abstand L₁ ein, welcher der vorgespannten Länge L₁ der Federelemente 13 entspricht, geometrisch vorgegeben durch das Anschlagelement 16 und das Abstützelement 16a. Die zwei benachbarten Außenlamellen 2c und 2d halten ebenfalls den Abstand L₁ ein, der dem Mindestabstand bzw. der vorgespannten Länge L₁ der Federelemente 13 entspricht, geometrisch vorgegeben durch das Anschlagelement 16 und das Abstützelement 16a. Die Innenlamelle 3c befindet sich ebenfalls nicht in Reibschluss mit den Außenlamellen 2c und 2d, es wird ebenfalls kein Drehmoment übertragen.

Mit der Vorspannkraft F_{1,c} der Federelemente 13 an der Außenlamelle 2c gilt: ${F}_{1 , a} < {F}_{1 , b} < {F}_{1 , c}$

Entsprechende Federkennlinien sind beispielhaft im rechten Bereich von Fig. 12 dargestellt. Ein entsprechender Zusammenhang gilt auch für die Gesamt-Vorspannkräfte F_{1,a,ges}, F_{1,b,ges}, F_{1,c,ges} der Außenlamellen 2a, 2b und 2c: ${F}_{1 , a , ges} < {F}_{1 , b , ges} < {F}_{1 , c , ges}$

Die Gesamt-Vorspannkraft F_{1,a,ges} der Außenlamelle 2a ergibt sich aus der Summe der Einzel-Vorspannkräfte F_{1,a} aller Federelemente 13 der Außenlamelle 2a. Entsprechendes gilt für die Gesamt-Vorspannkräfte F_{1,b,ges}, F_{1,c,ges} der Außenlamellen 2b und 2c. Die Vorspannkräfte nehmen zu, je näher die Außenlamelle 2 am Aktuator 7 liegt. Bei einer Erhöhung der vom Kolben bzw. Aktuator 7 auf die Außenlamellen 2 bzw. die Innenlamellen 3, hier auf die Außenlamelle 2d, wirkenden Gesamt-Betätigungskraft F_{B,ges}, hier durch Erhöhung des Betätigungsdrucks p, gehen zunächst die von dem Aktuator 7 am weitesten entfernt liegenden Lamellen 2 bzw. 3 in den Reibschluss. Der Aktuator 7 wirkt unmittelbar auf diese Lamellen 2 bzw. 3, da an den restlichen Lamellen 2 bzw. 3 noch die Anschlagelemente 16 aktiv sind und somit keine federnden Eigenschaften vorliegen, welche die Aktuatoreingriffe verfälschen. Bei einer weiteren Erhöhung der Gesamt-Betätigungskraft F_{B,ges} bzw. des Betätigungsdrucks p bewegt sich der Aktuator 7 weiter nach links, d.h. in Axialrichtung x, entlang der eingezeichneten positiven Richtung, und es gelangen zunehmend die näher am Aktuator 7 liegenden Lamellen 2 bzw. 3 ebenfalls in den Reibschluss, bis schließlich auch die Lamellen 2 bzw. 3 direkt neben dem Aktuator 7 in den Reibschluss gelangen. Dies führt zu einer guten Dosierbarkeit der Lamellenkupplung 1a beim Schließvorgang, d.h. zu einer guten Beeinflussbarkeit des im Reibschluss bzw. des im schlupfenden Zustand übertragenen Drehmomentes durch Anpassung der Gesamt-Betätigungskraft F_{B,ges} des Aktuators 7 und/oder der Position des Aktuators 7. Solange nur wenige Lamellen 2 bzw. 3 im Reibschluss sind, ergibt sich eine geringe Änderung des im Schlupf übertragenen Drehmomentes bei einer Änderung der Gesamt-Betätigungskraft F_{B,ges} des Aktuators 7 und/oder der Position des Aktuators 7, verbunden mit einer feineren Regelbarkeit. Zudem übertragen die Lamellen 2 bzw. 3, die sich bis zum vollständigen Schließen der Lamellenkupplung 1a in den Verzahnungen des Außenlamellenträgers 5 und/oder des Innenlamellenträger 10 noch axial verschieben müssen, d.h. die Lamellen 2 bzw. 3 in der Nähe des Aktuators 7, noch kein Drehmoment. Damit liegen keine Umfangskräfte an deren Zahnflanken vor, was die Reibung in den Verzahnungen minimiert und die axiale Verschieblichkeit verbessert. Dies wirkt sich positiv auf die Schaltqualität aus, die Hysterese im Momentenauf- bzw. -abbau verringert sich. D.h. die Hysterese in der Übertragung von der Gesamt-Betätigungskraft F_{B,ges} des Aktuators 7 und/oder der Position des Aktuators 7 auf das im schlupfenden Zustand übertragene Drehmoment der Lamellenkupplung 1a verringert sich.

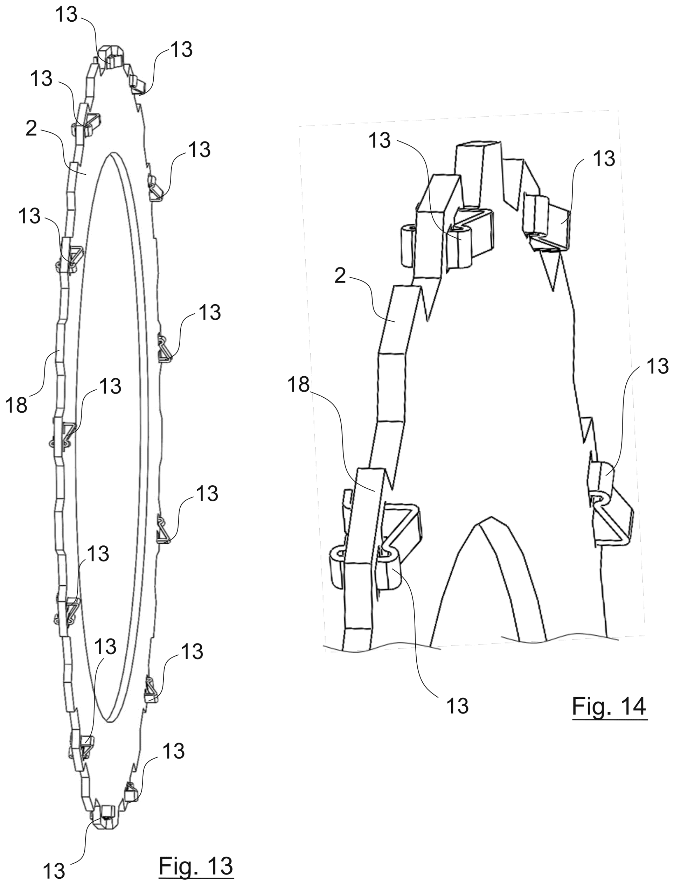

Die Figuren 13 und 14 zeigen in verschiedenen Ansichten eine der Außenlamellen 2 mit symmetrisch über den Umfang und durch Ausnehmungen in der Außenlamelle 2 verlaufenden, als Einzel-Federn bzw. Formfedern aus Federmaterial mit einem flachen Querschnitt ausgebildeten Federelementen 13.

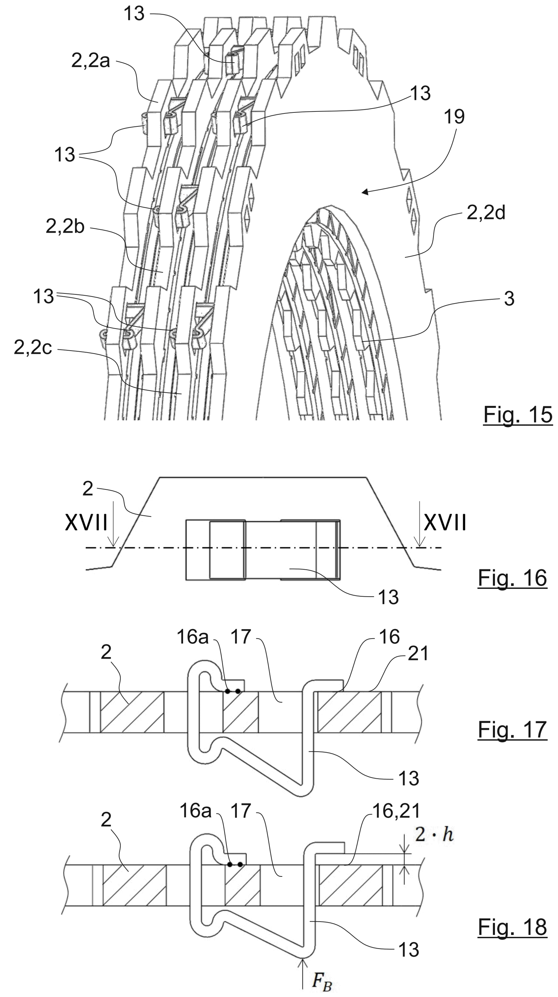

Fig. 15 zeigt zudem ein aus mehreren Außenlamellen 2 und Innenlamellen 3 gebildetes Lamellenpaket 19, wobei die letzte, rechtsliegende Außen- bzw. Endlamelle keine Einzel-Federn enthält.

Die Figuren 16, 17 und 18 zeigen Details der Federelemente 13 aus den Figuren 13, 14 und 15, von denen jedes ein Federelement 13 aus Fig. 4 ersetzt. Bevorzugt verläuft ein einzelnes Federelement 13 durch mindestens eine Ausnehmung 17 in der Außenlamelle 2 und liegt im vorgespannten Zustand stirnseitig an der Außenlamelle 2 an, wobei die Stirnseite 21 ein Anschlagelement 16 und ein Abstützelement 16a bildet. D.h. das wenigstens eine Anschlagelement 16 und das wenigstens eine Abstützelement 16a werden durch eine Stirnseite 21 der ersten Außenlamelle 2 gebildet.

Der vorgespannte Zustand bei einer offenen Lamellenkupplung 1a oder -bremse ist in Fig. 17 zu erkennen, in dem ein Gesamt-Lüftspiel 2·h an beiden Seiten einer Innenlamelle 3 vorliegt.

Fig. 18 zeigt eine geschlossene Lamellenkupplung 1a oder -bremse, bei der sich das einzelne Federelement 13 um das Gesamt-Lüftspiel 2·h gegenüber dem vorgespannten Zustand verkürzt bzw. weiter gespannt hat. Auch können sich die federnden Bereiche des einzelnen Federelements 13 stirnseitig an beiden Seiten der Außenlamelle 2 befinden, was den erforderlichen Bauraum reduziert. Das einzelne Federelement 13 kann dann teilweise oder vollständig innerhalb einer Zahnlücke der Innenverzahnung 6 bzw. einer Verzahnungstasche des Außenlamellenträgers 5 angeordnet werden. Es ist kein zusätzlicher Bauraum erforderlich, insbesondere nicht in radialer Richtung, was bei hohen Drehzahlen Vorteile bringt.

Vorzugsweise wird das Federelement 13 während der Fertigung gegen das Anschlagelement 16 und das Abstützelement 16a vorgespannt und an mindestens einer Stelle mit der Lamelle 2 bzw. 3 verbunden, zum Beispiel durch Umformen, eine Schweiß-, Löt-, Klebe- oder Nietverbindung oder mittels einer Schnappverbindung "eingeclipst". Es entsteht eine Federkennlinie entsprechend Fig. 5. Durch mehrere am Umfang der Außenlamelle 2 symmetrisch verteilte Federelemente 13 wird eine Federeinrichtung gebildet. Die exakten Positionen der Federelemente 13 können vor dem Verbinden mit der Außenlamelle 2 so eingestellt werden, dass geringe Unwuchten entstehen. Auch hier kann ein Auswuchten der Außenlamelle 2 zusammen mit den mit derselben verbundenen Federelementen 13 während der Fertigung erfolgen. Da die Positionen der Federelemente 13 auf der Außenlamelle 2 exakt vorgegeben sind, entsteht während des Betriebs kaum zusätzliche Unwucht, was ebenfalls Vorteile bei hohen Drehzahlen bringt. Bevorzugt werden die vorgespannten Längen L₁, die Vorspannkräfte F₁ und/oder die Federkennlinien der jeweiligen Federelemente 13 an der jeweiligen Außenlamelle 2 während der Fertigung auf dieselben Werte eingestellt, zum Beispiel durch Auswahl geeigneter Exemplare der Federelemente 13 oder beim Biegeprozess der Federelemente 13.

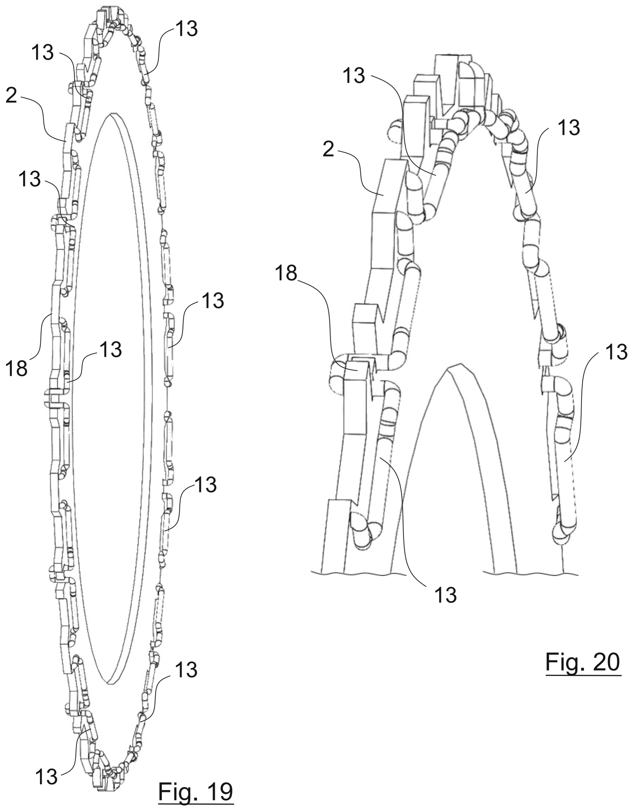

Die Figuren 19, 20 und 21 zeigen in verschiedenen Ansichten eine Außenlamelle 2 mit symmetrisch über den Umfang und durch Ausnehmungen 17 in der Außenlamelle 2 verlaufenden, als Einzel-Federn bzw. Formfedern aus Federmaterial mit einem runden Querschnitt ausgebildeten Federelementen 13.

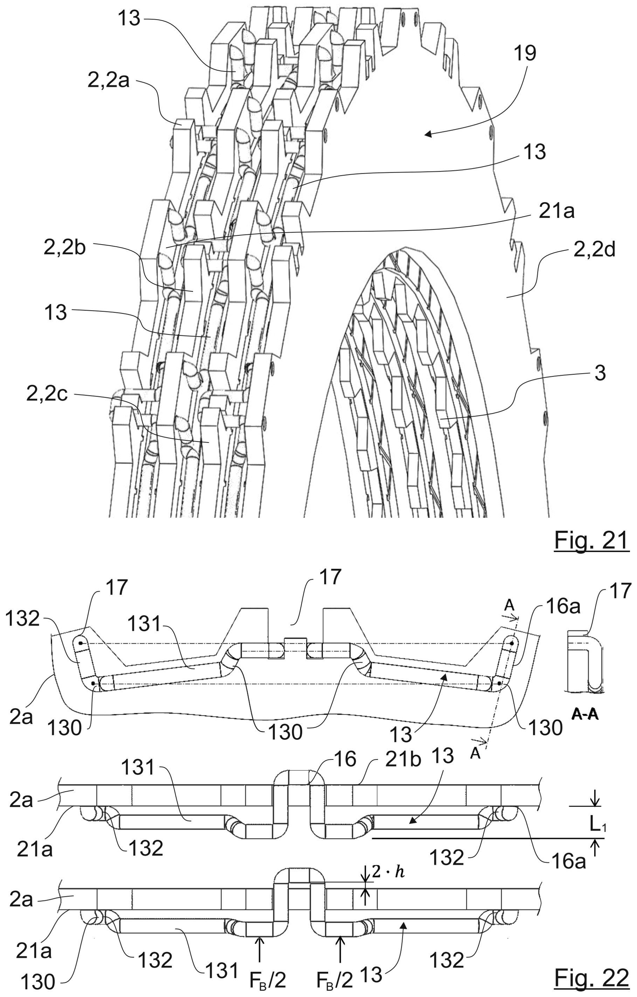

Fig. 21 zeigt zudem ein aus mehreren Außenlamellen 2 und Innenlamellen 3 gebildetes Lamellenpaket 19, wobei die letzte, rechtsliegende Außen- bzw. Endlamelle 2 keine Federelemente 13 enthält. Die dargestellte Anordnung ist als Beispiel zu sehen. Bevorzugt werden in Umfangsrichtung zwischen den Federelementen 13 Bereiche bzw. einzelne Zähne frei gelassen, an denen eine verbesserte Durchströmung von Kühlöl ermöglicht wird.

Fig. 22 zeigt Details der Federelemente 13 gemäß der Figuren 19, 20 und 21, von denen jedes ein Federelement 13 aus Fig. 4 ersetzt. Die Federelemente 13 werden auf Torsion und Biegung beansprucht. Auch ein quadratischer Querschnitt ist möglich. Die Federelemente 13 enthalten mehrere Kröpfungen 130, die in die Zahnlücken der Innenverzahnung 6 bzw. Verzahnungstaschen des Außenlamellenträgers 5 hineinragen. Die Kröpfungen 130 in den Verzahnungstaschen sind so ausgeführt, dass sie je einzelnem Federelement 13 ein Federsegment 131 und zwei zur Anlage an der jeweiligen Lamelle 2 bzw. 3 dienende Anlagesegmente 132 bilden, es sind jedoch auch andere Kombinationen möglich. Mehrere Federelemente 13 sind symmetrisch am Umfang der ersten Außenlamelle 2a angeordnet.

Die Kröpfungen 130 der Federsegmente 131 verlaufen in radialer Richtung schräg von der ersten Stirnseite 21a der ersten Außenlamelle 2a weg und geben bei geöffneter Lamellenkupplung 1a einen Mindestabstand zu einer benachbarten, zweiten Außenlamelle 2b geometrisch vor. Hierzu verlaufen die Kröpfungen 130 der Federsegmente 131 durch Ausbrüche bzw. die Ausnehmungen 17 an der ersten Außenlamelle 2a und zumindest teilweise an der zweiten Stirnseite 21b der ersten Außenlamelle 2a, wobei die zweite Stirnseite 21b die Anschlagelemente 16 bildet. Damit wird das Federelement 13 vorgespannt. Die Kröpfungen 130 der Federsegmente 131 berühren somit im vorgespannten Zustand die zweite Stirnseite 21b der ersten Außenlamelle 2a in einem Anschlagpunkt bzw. Anschlagbereich der ersten Außenlamelle 2a. Die Kröpfungen 130 der Federsegmente 131 liegen im vorgespannten Zustand an der die Anschlagelemente 16 bildenden zweiten Stirnseite 21b der ersten Außenlamelle 2a an. Die zweite Stirnseite 21b der ersten Außenlamelle 2a bildet somit die Anschlagelemente 16, welche die Vorspannung der Federelemente 13 erzeugen. Die Federelemente 13 stützen sich an der ersten Stirnseite 21a der ersten Außenlamelle 2a ab; die erste Stirnseite 21a der ersten Außenlamelle 2a bildet somit eine Abstützung bzw. Abstützelemente 16a für die Federelemente 13. D.h. das wenigstens eine Anschlagelement 16 und das wenigstens eine Abstützelement 16a werden jeweils durch eine Stirnseite der ersten Außenlamelle 2a gebildet. Die vorgespannte Länge L₁ des Federelements 13 gibt den Mindestabstand zwischen der ersten Außenlamelle 2a zur benachbarten, zweiten Außenlamelle 2b bei geöffneter Lamellenkupplung 1a vor. Die vorgespannte Länge L₁ des Federelements 13 entspricht hier dem Mindestabstand. Die Kröpfungen 130 der Federsegmente 131, welche in diesem Fall an der die Anschlagelemente 16 bildenden zweiten Stirnseite 21b der ersten Außenlamelle 2a anschlagen, sind bevorzugt in den Zahnlücken der Innenverzahnung 6 bzw. in Verzahnungstaschen des Außenlamellenträgers 5 angeordnet.

Die Kröpfungen 130 der beiden Anlagesegmente 132 verlaufen an der ersten Stirnseite 21a der ersten Außenlamelle 2a in radialer Richtung. Zur Fixierung bzw. Positionierung des jeweiligen Federelements 13 auf der ersten Außenlamelle 2a ragen die Anlagesegmente 132 in Bohrungen bzw. Ausnehmungen 17 der ersten Außenlamelle 2a hinein. Die Anlagesegmente 132 stützen die Federkraft bzw. Federvorspannkraft gegen die das Abstützelement 16a bildende erste Stirnseite 21a der ersten Außenlamelle 2a ab. Dabei berührt jedes Anlagesegment 132 die erste Stirnseite 21a der ersten Außenlamelle 2a an mindestens einem ersten, inneren Abstützpunkt und einem zweiten, äußeren Abstützpunkt bzw. einem dazwischenliegenden Abstützbereich bzw. einem Abstützelement 16a, wobei der innere Abstützpunkt in radialer Richtung einen kleineren Abstand zur Rotationsachse 4 aufweist als der äußere Abstützpunkt.

Bevorzugt liegt der Anschlagpunkt bzw. Anschlagbereich der zweiten Stirnseite 21b der ersten Außenlamelle 2a, welcher das Anschlagelement 16 bildet und an welchem das Federsegment 131 im vorgespannten Zustand anschlägt, in radialer Richtung zwischen einer ersten Geraden, welche die beiden inneren Abstützpunkte des Abstützelements 16a an der ersten Stirnseite 21a der ersten Außenlamelle 2a verbindet und einer zweiten Geraden, welche die beiden äußeren Abstützpunkte des Abstützelements 16a an der ersten Stirnseite 21a der ersten Außenlamelle 2a verbindet. Damit wird ein Verkippen des Federelements 13 in seinem vorgespannten Zustand sicher vermieden.

Die Kröpfungen 130 der Anlagesegmente 132 sind ebenfalls bevorzugt in den Zahnlücken der Innenverzahnung 6 bzw. Verzahnungstaschen des Außenlamellenträgers 5 angeordnet. Bevorzugt berühren sich das Federelement 13 und die erste Außenlamelle 2a nur an dem Anschlagpunkt bzw. Anschlagbereich bzw. Anschlagelement 16 der zweiten Stirnseite 21b der ersten Außenlamelle 2a und jeweils dem inneren und dem äußeren Abstützpunkt bzw. Abstützelement 16a der ersten Stirnseite 1a der ersten Außenlamelle 2a bzw. den angrenzenden Bereichen. Damit erfahren die verstärkt auf Biegung und Torsion beanspruchten, im Bereich der Zahnfüße in Umfangsrichtung verlaufenden Bereiche des Federelements 13 keinen Kontakt zur ersten Außenlamelle 2a. Günstig ist, wenn diese Bereiche zur benachbarten, zweiten Außenlamelle 2b und der radial weiter innen angebrachten Innenlamelle 3 ebenfalls keinen Kontakt haben. Dann wird die Oberfläche der auf Biegung und Torsion beanspruchten Bereiche des jeweiligen Federelements 13 nicht durch Reibung geschädigt, was die Dauerhaltbarkeit verbessert.

Bevorzugt befinden sich die Ausnehmungen 17 bzw. Bohrungen bzw. Ausbrüche bzw. Öffnungen bzw. Einschnitte bzw. Einfräsungen, in welche entsprechende Ausformungen an den Enden der Kröpfungen 130 der Anlagesegmente 132 eingreifen, in der Nähe der Zahnköpfe der ersten Außenlamelle 2a. Das Federelement 13 ist in die erste Außenlamelle 2a mittels einer Schnappverbindung eingeclipst und somit über die Federkraft bzw. Federvorspannkraft mit der ersten Außenlamelle 2a verbunden bzw. daran befestigt. Die Ausnehmungen 17 in der ersten Außenlamelle 2a werden genutzt, um das Federelement 13 relativ zu der ersten Außenlamelle 2a zu fixieren und zu positionieren bzw. zu zentrieren und eine Verschiebung zwischen dem Federelement 13 und der ersten Außenlamelle 2a zu verhindern.

Die Kröpfungen 130 der Anlagesegmente 132 können in den Ausnehmungen 17 an der ersten Außenlamelle 2a und zumindest teilweise an der zweiten Stirnseite 21b der ersten Außenlamelle 2a verlaufen, um das Federelement 13 relativ zu der ersten Außenlamelle 2a zu fixieren und zu positionieren, zum Beispiel, indem die Kröpfungen 130 der Anlagesegmente 132 bei der Montage an der ersten Außenlamelle 2a umgeformt werden. Infolge einer guten Positionierung, die sich beim Betrieb nicht mehr ändert, entsteht bei einem Auswuchten der ersten Außenlamelle 2a zusammen mit den mit derselben verbundenen Federelementen 13 während der Fertigung im Betrieb kaum Unwucht. Bevorzugt werden die vorgespannten Längen L₁, die Einzel-Vorspannkräfte F₁ und/oder die Federkennlinien der mehreren Federelemente 13 nach Montage an der Außenlamelle 2a während der Fertigung auf dieselben Werte eingestellt, zum Beispiel beim Biegeprozess bzw. plastischen Verformen der Federelemente 13. Dies umfasst insbesondere auch ein Biegen der Kröpfungen 130 des Federelements 13, welches an der als Anschlagelement 16 wirkenden zweiten Stirnseite 21b der ersten Außenlamelle 2a anschlägt, um die vorgespannten Längen L₁ einzustellen. Auch ein plastisches Verformen der Außenlamelle 2a oder ein Materialabtrag von der Außenlamelle 2a während der Fertigung, zum Beispiel auf der als Anschlagelemente 16 wirkenden zweiten Stirnseite 21b im Bereich der Anschlagpunkte bzw. der Anschlagbereiche bzw. der Kröpfungen 130 der Federelemente 13, ist möglich. Alternativ oder ergänzend dazu können die Kontaktbereiche, d.h. die mit der benachbarten zweiten Außenlamelle 2b in Kontakt kommenden Kröpfungen 130 der Federelemente 13, an welchen bei Kontakt eine Kraft bzw. Betätigungskraft F_{B} eingeleitet wird, überschliffen werden, wodurch die vorgespannten Längen L₁ aller Federelemente 13 einer Außenlamelle 2a auf exakt denselben Wert eingestellt werden.

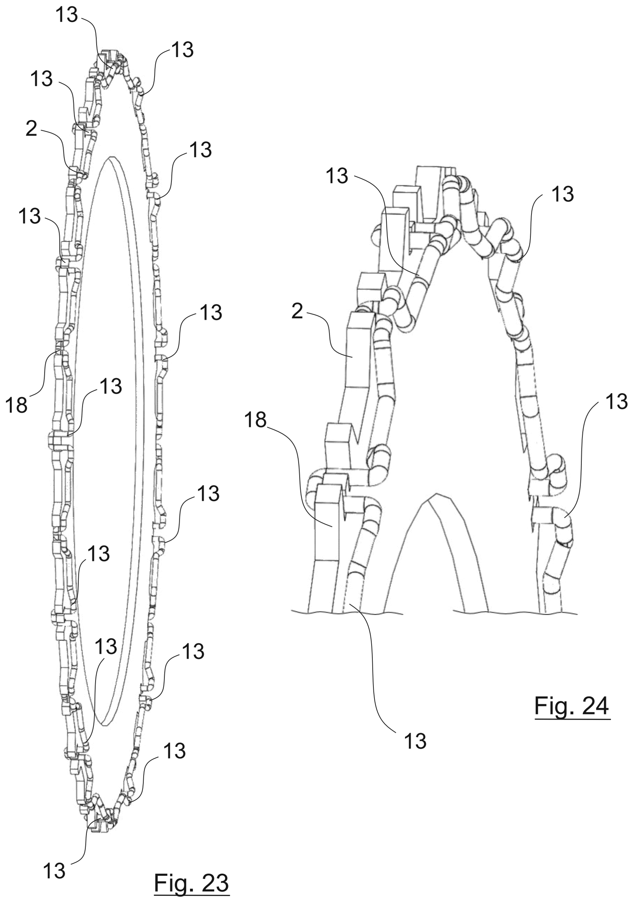

Die Figuren 23 bis 26 zeigen ein Federelement 13, das als umlaufende, rotationssymmetrische Feder ausgebildet ist, welche so ausgebildet und an dem Drehmomentübertragungselement 1 angeordnet ist, dass sie während des Betriebs des Drehmomentübertragungselements 1 auf Torsion und Biegung beansprucht wird. Das Federelement 13 enthält mehrere Kröpfungen 130, die in die Zahnlücken der Innenverzahnung 6 bzw. Verzahnungstaschen des Außenlamellenträgers 5 hineinragen.

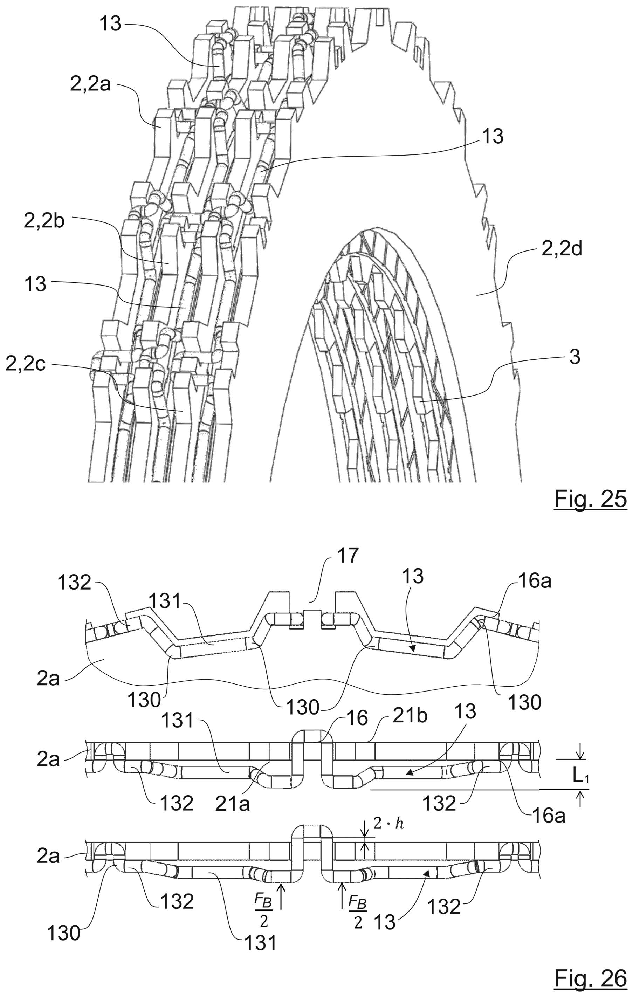

Fig. 26 zeigt Details des Federelements 13 gemäß den Figuren 23 bis 25. Die Kröpfungen 130 bilden Federsegmente 131 und Anlagesegmente 132. Mehrere Federsegmente 131 und mehrere Anlagesegmente 132 sind abwechselnd und symmetrisch am Umfang der ersten Außenlamelle 2a angeordnet. Das Federelement 13 ist an einer ersten Stirnseite 21a der ersten Außenlamelle 2a rotationssymmetrisch zu der ersten Außenlamelle 2a angebracht. Die Kröpfungen 130 der Anlagesegmente 132 verlaufen an der ersten Stirnseite 21a der ersten Außenlamelle 2a und stützen die Federkraft bzw. Federvorspannkraft gegen die das Abstützelement 16a bildende erste Stirnseite 21a der ersten Außenlamelle 2a ab. D.h. jedes Anlagesegment 132 berührt die erste Stirnseite 21a der ersten Außenlamelle 2a an einem Abstützbereich bzw. Abstützelement 16a. Die Kröpfungen 130 der Federsegmente 131 verlaufen in radialer Richtung von der ersten Stirnseite 21a der ersten Außenlamelle 2a weg und geben bei geöffneter

Lamellenkupplung 1a einen Mindestabstand zu einer benachbarten, zweiten Außenlamelle 2b geometrisch vor. Hierzu verlaufen die Kröpfungen 130 der Federsegmente 131 durch Ausnehmungen 17 bzw. Ausbrüche an der ersten Außenlamelle 2a und zumindest teilweise an der zweiten Stirnseite 21b der ersten Außenlamelle 2a und wirken im Anschlagpunkt bzw. Anschlagbereich der als Anschlagelemente 16 wirkenden zweiten Stirnseite 21b der ersten Außenlamelle 2a gegen diese. Damit wird das Federelement 13 vorgespannt. Die Kröpfungen 130 der Federsegmente 131 wirken dann mit der Federvorspannkraft gegen die die Anschlagelemente 16 bildende zweite Stirnseite 21b der ersten Außenlamelle 2a. Die vorgespannte Länge L₁ des Federelements 13 gibt den Mindestabstand zwischen der ersten Außenlamelle 2a zur benachbarten, zweiten Außenlamelle 2b bei geöffneter Lamellenkupplung 1a vor. Die vorgespannte Länge L₁ des Federelements 13 entspricht hier dem Mindestabstand. Dazu berührt die zweite Außenlamelle 2b das Federelement 13 im Kontaktbereich. Die Kröpfungen 130 der Federsegmente 131 und die Anschlagelemente 16 sind bevorzugt in den Zahnlücken der Innenverzahnung 6 bzw. Verzahnungstaschen des Außenlamellenträgers 5 angeordnet. Die Kröpfungen 130 der Anlagesegmente 132 sind ebenfalls bevorzugt in den Zahnlücken der Innenverzahnung 6 bzw. Verzahnungstaschen des Außenlamellenträgers 5 angeordnet. Bevorzugt berühren sich das Federelement 13 und die erste Außenlamelle 2a nur an den radial außen liegenden Enden der Kröpfungen 130 der Federsegmente 131 und an den radial außen liegenden Enden der Kröpfungen 130 der Anlagesegmente 132, d.h. in der Nähe der Zahnköpfe der ersten Außenlamelle 2a. Damit erfahren die verstärkt auf Torsion beanspruchten, im Bereich der Zahnfüße in Umfangsrichtung verlaufenden Bereiche des Federelements 13 keinen Kontakt zu der ersten Außenlamelle 2a. Günstig ist, wenn diese Bereiche zu der benachbarten, zweiten Außenlamelle 2b und der radial weiter innen angebrachten Innenlamelle 3 ebenfalls keinen Kontakt haben. Dann wird die Oberfläche der auf Torsion beanspruchten Bereiche des Federelements 13 nicht durch Reibung geschädigt, was die Dauerhaltbarkeit verbessert.

Bevorzugt befinden sich die radial außen liegenden Enden der Kröpfungen 130 der Federsegmente 131 auf einem kleineren Radius als die radial außen liegenden Enden der Kröpfungen 130 der Anlagesegmente 132. Dies verbessert die Federeigenschaften des Federelements 13.

Das Federelement 13 ist wiederum mittels einer Schnappverbindung in die erste Außenlamelle 2a eingeclipst und somit über die Federkraft bzw. Federvorspannkraft mit der ersten Außenlamelle 2a verbunden. Die Ausnehmungen 17 bzw. Ausbrüche bzw. weitere Öffnungen oder Einschnitte in der ersten Außenlamelle 2a werden genutzt, um das Federelement 13 relativ zu der ersten Außenlamelle 2a zu fixieren und positionieren bzw. zu zentrieren und eine Verschiebung zwischen dem Federelement 13 und der ersten Außenlamelle 2a zu verhindern.

Bevorzugt befinden sich weitere Ausnehmungen, Ausbrüche, Öffnungen oder Einschnitte in der Nähe der Zahnköpfe der ersten Außenlamelle 2a, in welche an den Enden der Kröpfungen 130 der Anlagesegmente 132 vorgesehene Ausformungen eingreifen. Die Kröpfungen 130 der Anlagesegmente 132 können in Ausnehmungen, Ausbrüchen usw. an der ersten Außenlamelle 2a bzw. zumindest teilweise an der zweiten Stirnseite 21b der ersten Außenlamelle 2a verlaufen, um das Federelement 13 relativ zu der ersten Außenlamelle 2a zu fixieren und zu positionieren. Infolge einer guten Positionierung, die sich beim Betrieb nicht mehr ändert, entsteht bei einem Auswuchten der ersten Außenlamelle 2a zusammen mit dem damit verbundenen Federelement 13 während der Fertigung im Betrieb kaum Unwucht. Bevorzugt werden die vorgespannten Längen L₁, die Einzel-Vorspannkräfte F₁ und/oder die Federkennlinien der mehreren Federsegmente 131 eines Federelements 13 an einer Außenlamelle 2a während der Fertigung auf dieselben Werte eingestellt, zum Beispiel beim Biegeprozess des Federelements 13. Dies umfasst insbesondere auch ein Biegen bzw. plastisches Verformen der Kröpfungen 130 des Federelements 13, welche gegen die als Anschlagelemente 16 dienende zweite Stirnseite 21b der ersten Außenlamelle 2a wirken, um die vorgespannten Längen L₁ einzustellen. Auch ein plastisches Verformen der Außenlamelle 2a oder ein Materialabtrag von der Außenlamelle 2a während der Fertigung, zum Beispiel auf der zweiten Stirnseite 21b, im Bereich der als Anschlagelemente 16 wirkenden Anschlagpunkte bzw. Anschlagbereiche der zweiten Stirnseite 21b der ersten Außenlamelle 2a, ist möglich. Alternativ oder ergänzend dazu können die mit der benachbarten Außenlamelle 2 in Kontakt kommenden Kröpfungen 130 des Federelements 13 bzw. die Kontaktbereiche, an welchen bei Kontakt eine Kraft bzw. Betätigungskraft F_{B} eingeleitet wird, überschliffen werden, wodurch die vorgespannten Längen L₁ auf exakt denselben Wert eingestellt werden.

Bevorzugt besteht zwischen den Ausnehmungen 17 bzw. Ausbrüchen an der ersten Außenlamelle 2a und den darin verlaufenden Kröpfungen 130 der Federsegmente 131 ein Kontakt, der Reibung erzeugt. Die erforderliche Normalkraft wird infolge der Federwirkung und/oder infolge von Fliehkräften aufgebracht. Damit lassen sich Taumelbewegungen der benachbarten Außenlamellen 2 während eines Schließ- oder Öffnungsvorganges der Lamellenkupplung 1a dämpfen.

Das in den Figuren 23 bis 26 dargestellte Federelement 13 ist aus Runddraht gefertigt, es sind beispielsweise jedoch auch quadratische oder rechteckige Querschnitte in Form eines Vierkantdrahts bzw. einer Flachfeder möglich.

In einer nicht dargestellten Ausführungsform kann das Federelement 13 nur aus Federsegmenten 131 bestehen, ähnlich einer geschlitzten Tellerfeder, wobei die im Bereich der Zahnfüße in Umfangsrichtung verlaufenden Bereiche bzw. Abstützelemente 16a der ersten Stirnseite 21a der ersten Außenlamelle 2a als Abstützung wirken, an welcher sich das Federelement 13 mit der Federkraft bzw. Federvorspannkraft abstützt.

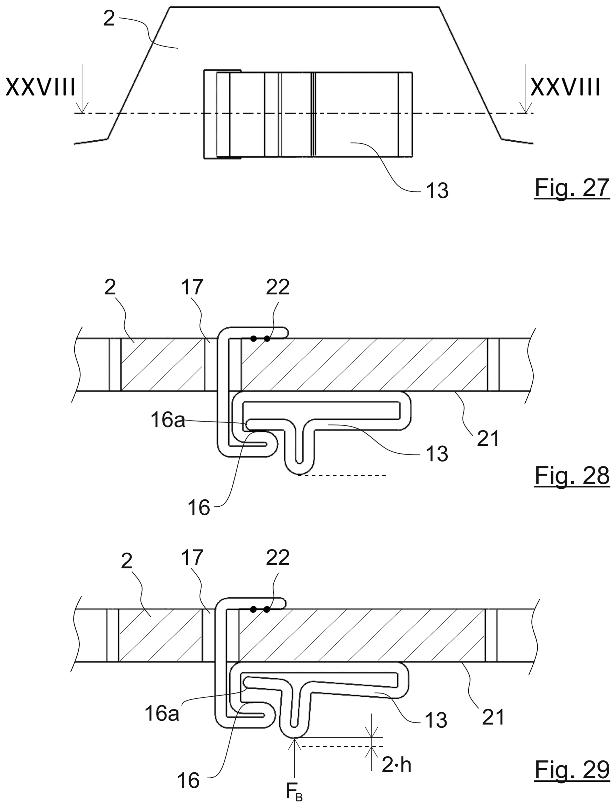

Die Figuren 27, 28 und 29 zeigen eine zu den Figuren 16, 17 und 18 alternative Ausführung der Federelemente 13 von denen jedes ein Federelement 13 mitsamt Anschlagelement 16 und Abstützelement 16a aus Fig. 4 ersetzt. Bevorzugt verläuft ein einzelnes Federelement 13 durch mindestens eine Ausnehmung 17 in der Außenlamelle 2, kann sich jedoch auch vollständig an nur einer Stirnseite 21 der Außenlamelle 2 befinden. Dabei werden das wenigstens eine Anschlagelement 16 und das wenigstens eine Abstützelement 16a durch das wenigstens eine Federelement 13 selbst gebildet. Der vorgespannte Zustand wird beispielsweise beim Fertigungs- bzw. Beigeprozess des Federelements 13 erzeugt.

Der vorgespannte Zustand bei einer offenen Lamellenkupplung 1a oder -bremse ist in Fig. 28 zu erkennen, in dem ein Gesamt-Lüftspiel 2·h an beiden Seiten einer Innenlamelle 3 vorliegt.

Fig. 29 zeigt eine geschlossene Lamellenkupplung 1a oder -bremse, bei der sich das einzelne Federelement 13 um das Gesamt-Lüftspiel 2·h gegenüber dem vorgespannten Zustand verkürzt bzw. weiter gespannt hat. Die federnden Bereiche des einzelnen Federelements 13 können sich stirnseitig an beiden Seiten der Außenlamelle 2 befinden, was den erforderlichen Bauraum reduziert. Das einzelne Federelement 13 kann teilweise oder vollständig innerhalb einer Zahnlücke der Innenverzahnung 6 bzw. einer Verzahnungstasche des Außenlamellenträgers 5 angeordnet werden. Es ist kein zusätzlicher Bauraum erforderlich, insbesondere nicht in radialer Richtung, was bei hohen Drehzahlen Vorteile bringt.

Vorzugsweise wird das Federelement 13 während der Fertigung gegen das beinhaltete Anschlagelement 16 und das beinhaltete Abstützelement 16a vorgespannt, sodass auf das Anschlagelement 16 und das Abstützelement 16a eine Federkraft bzw. Vorspannkraft wirkt. Vorzugsweise wird das Federelement 13 an mindestens einer Stelle mit der Außenlamelle 2 verbunden, zum Beispiel durch Umformen, eine Schweiß-, Löt-, Klebe- oder Nietverbindung 22 oder mittels einer Schnappverbindung "eingeclipst". Es entsteht eine Federkennlinie entsprechend Fig. 5. Durch mehrere am Umfang der Außenlamelle 2 symmetrisch verteilte Federelemente 13 wird eine Federeinrichtung gebildet. Die exakten Positionen der Federelemente 13 können vor dem Verbinden mit der Außenlamelle 2 so eingestellt werden, dass geringe Unwuchten entstehen. Auch hier kann ein Auswuchten der Außenlamelle 2 zusammen mit den mit derselben verbundenen Federelementen 13 während der Fertigung erfolgen. Da die Positionen der Federelemente 13 auf der Außenlamelle 2 exakt vorgegeben sind, entsteht während des Betriebs kaum zusätzliche Unwucht, was ebenfalls Vorteile bei hohen Drehzahlen bringt. Bevorzugt werden die vorgespannten Längen L₁, die Vorspannkräfte F₁ und/oder die Federkennlinien der jeweiligen Federelemente 13 an der jeweiligen Außenlamelle 2 während der Fertigung auf dieselben Werte eingestellt, zum Beispiel durch Auswahl geeigneter Exemplare der Federelemente 13 oder beim Biegeprozess der Federelemente 13 oder beim Erzeugen der Löt-, Klebe- oder Nietverbindung zum Verbinden der Federelemente 13 mit der Außenlamelle 2.

In den oben beschriebenen Ausführungsbeispielen ist die Erfindung mit ihren Weiterbildungen jeweils nur anhand zweier benachbarter Außenlamellen 2 erläutert. Eine Anwendung an zwei benachbarten Innenlamellen 3 ist ebenfalls möglich.

Des Weiteren ist die Erfindung mit ihren Weiterbildungen in den oben beschriebenen Ausführungsbeispielen jeweils anhand einer Lamellen- bzw. Mehrscheibenkupplung 1a erläutert worden. Eine Anwendung an einer Lamellenbremse ist ebenfalls möglich.

Insbesondere bei Hochdrehzahlanwendungen entstehen hohe Fliehkräfte auf das wenigstens eine Federelement 13. Bevorzugt erfolgt eine Berücksichtigung der Fliehkräfte bei der Gestaltung bzw. der Massenverteilung des wenigstens einen Federelements 13 bzw. sämtlicher, eine Federeinrichtung bildender Federelemente 13, sodass sich die Einzel-Vorspannkräfte F₁ bzw. die Gesamt-Vorspannkraft F_{1,ges} bzw. die Federkennlinie an einer Lamelle 2 bzw. 3 über der Drehzahl derselben in geeigneter Weise ändern.

## Patentansprüche

1. Vorrichtung (12) zur Reduzierung von Schleppmomenten bei einem wenigstens zwei nebeneinander angeordnete Außenlamellen (2,2a,2b,2c,2d) und/oder wenigstens zwei nebeneinander angeordnete Innenlamellen (3,3a,3b,3c) aufweisenden Drehmomentübertragungselement (1), mit wenigstens einem zwischen zwei nebeneinander angeordneten Außenlamellen (2,2a,2b,2c,2d) und/oder zwischen zwei nebeneinander angeordneten Innenlamellen (3,3a,3b,3c) angeordneten und diese auseinanderspreizenden Federelement (13),
**dadurch gekennzeichnet , dass**
das wenigstens eine Federelement (13) im geöffneten Zustand des Drehmomentübertragungselements (1) durch direkten Kontakt mit wenigstens einem Anschlagelement (16) und wenigstens einem Abstützelement (16a) einer einzelnen der zwei nebeneinander angeordneten Außenlamellen (2,2a,2b,2c,2d) oder einer einzelnen der zwei nebeneinander angeordneten Innenlamellen (3,3a,3b,3c) oder des wenigstens einen Federelements (13) eine geometrisch definierte vorgespannte Länge einnimmt und dabei mit einer Federkraft auf das wenigstens eine Anschlagelement (16) und das wenigstens eine Abstützelement (16a) wirkt und somit einen Mindestabstand zwischen den zwei nebeneinander angeordneten Außenlamellen (2,2a,2b,2c,2d) und/oder zwischen den zwei nebeneinander angeordneten Innenlamellen (3,3a,3b,3c) geometrisch definiert vorgibt.

2. Vorrichtung nach Anspruch 1,
**dadurch gekennzeichnet , dass**
das wenigstens eine Federelement (13) in axialer Richtung, insbesondere ausschließlich in axialer Richtung, mit der Federkraft auf das wenigstens eine Anschlagelement (16) und das wenigstens eine Abstützelement (16a) wirkt.

3. Vorrichtung (12) zur Reduzierung von Schleppmomenten bei einem wenigstens zwei nebeneinander angeordnete Außenlamellen (2,2a,2b,2c,2d) und/oder wenigstens zwei nebeneinander angeordnete Innenlamellen (3,3a,3b,3c) aufweisenden Drehmomentübertragungselement (1), mit wenigstens einem zwischen zwei nebeneinander angeordneten Außenlamellen (2,2a,2b,2c,2d) und/oder zwischen zwei nebeneinander angeordneten Innenlamellen (3,3a,3b,3c) angeordneten und diese auseinanderspreizenden Federelement (13),
**dadurch gekennzeichnet , dass**
dem wenigstens einen Federelement (13) wenigstens ein Anschlagelement (16) zugeordnet ist, wobei das wenigstens eine Anschlagelement (16) dazu eingerichtet ist, einen Abstand zwischen den zwei nebeneinander angeordneten Außenlamellen (2,2a,2b,2c,2d) und/oder zwischen den zwei nebeneinander angeordneten Innenlamellen (3,3a,3b,3c) im geöffneten Zustand des Drehmomentübertragungselements (1) derart zu begrenzen, dass der Abstand wenigstens einem Mindestabstand entspricht.

4. Vorrichtung nach Anspruch 3,
**dadurch gekennzeichnet , dass**
dem wenigstens einen Federelement (13) ein Abstützelement (16a) zugeordnet ist, wobei das wenigstens eine Federelement (13) im geöffneten Zustand des Drehmomentübertragungselements durch direkten Kontakt mit dem wenigstens einen Anschlagelement (16) und dem wenigstens einen Abstützelement (16a) einer einzelnen der zwei nebeneinander angeordneten Außenlamellen (2,2a,2b,2c,2d) oder einer einzelnen der zwei nebeneinander angeordneten Innenlamellen (3,3a,3b,3c) oder des wenigstens einen Federelements (13) eine geometrisch definierte vorgespannte Länge einnimmt und dabei in axialer Richtung, insbesondere ausschließlich in axialer Richtung, mit einer Federkraft auf das wenigstens eine Anschlagelement (16) und das wenigstens eine Abstützelement (16a) wirkt und somit den Mindestabstand zwischen den zwei nebeneinander angeordneten Außenlamellen (2,2a,2b,2c,2d) und/oder zwischen den zwei nebeneinander angeordneten Innenlamellen (3,3a,3b,3c) geometrisch definiert vorgibt.

5. Vorrichtung nach Anspruch 1, 2 oder 4,
**dadurch gekennzeichnet , dass**
eine einzelne der zwei benachbarten Innenlamellen (3,3a,3b,3c) oder eine einzelne der zwei benachbarten Außenlamellen (2,2a,2b,2c,2d) oder das wenigstens eine Federelement (13) das wenigstens eine Anschlagelement (16) und das wenigstens eine Abstützelement (16a) bilden bzw. beinhalten.

6. Vorrichtung nach Anspruch 1, 2, 4 oder 5,
**dadurch gekennzeichnet , dass**
das wenigstens eine Anschlagelement (16) und das wenigstens eine Abstützelement (16a) durch eine oder durch jeweils eine Stirnseite (21,21a,21b,31) wenigstens einer der Außenlamellen (2,2a,2b,2c,2d) und/oder wenigstens einer der Innenlamellen (3,3a,3b,3c) gebildet ist.

7. Vorrichtung nach einem der Ansprüche 1, 2 oder 4 bis 6,
**dadurch gekennzeichnet , dass**
das wenigstens eine Federelement (13) zumindest abschnittsweise entlang beider Stirnseiten (21,21a,21b,31) von wenigstens einer der Außenlamellen (2,2a,2b,2c,2d) und/oder wenigstens einer der Innenlamellen (3,3a,3b,3c) und/oder durch Ausnehmungen (17) derselben hindurch verläuft.

8. Vorrichtung nach einem der Ansprüche 1, 2 oder 4 bis 7,
**dadurch gekennzeichnet , dass**
das wenigstens eine Federelement (13) mittels einer Schnappverbindung an einer einzelnen der Außenlamellen (2,2a,2b,2c,2d) und/oder einer einzelnen der Innenlamellen (3,3a,3b,3c) angebracht ist.

9. Vorrichtung nach einem der Ansprüche 1, 2 oder 4 bis 8,
**dadurch gekennzeichnet , dass**
das wenigstens eine Federelement (13) so ausgebildet ist, dass eine Federwirkung des Federelements (13) und/oder eine während des Betriebs des Drehmomentübertragungselements (1) wirkende Fliehkraft eine Reibung zwischen dem wenigstens einen Federelement (13) und wenigstens einer der Außenlamellen (2,2a,2b,2c,2d) und/oder wenigstens einer der Innenlamellen (3,3a,3b,3c) im nicht geöffneten Zustand des Drehmomentübertragungselements (1) erzeugt.

10. Vorrichtung nach einem der Ansprüche 1 bis 9,
**dadurch gekennzeichnet , dass**
das wenigstens eine Federelement (13) als wenigstens eine, auf einem mit einer der Außenlamellen (2,2a,2b,2c,2d) und/oder einer der Innenlamellen (3,3a,3b,3c) einstückig ausgebildeten Führungsdorn (14) geführte Feder ausgebildet ist, wobei an einem der Außenlamelle (2,2a,2b,2c,2d) und/oder der Innenlamelle (3,3a,3b,3c) abgewandten Ende des Führungsdorns (14) das wenigstens eine Anschlagelement (16) angeordnet ist, wobei das wenigstens eine Anschlagelement (16) sich in einer Ausnehmung (17) der benachbarten Außenlamelle (2,2a,2b,2c,2d) und/oder Innenlamelle (3,3a,3b,3c) befindet, und wobei an einem den Außenlamellen (2,2a,2b,2c,2d) und/oder den Innenlamellen (3,3a,3b,3c) zugewandten Ende des Führungsdorns (14) das wenigstens eine Abstützelement (16a) angeordnet ist.

11. Vorrichtung nach einem der Ansprüche 1 bis 10,
**dadurch gekennzeichnet , dass**
die geometrisch definierte vorgespannte Länge des wenigstens einen Federelements (13) in seinem vorgespannten Zustand im geöffneten Zustand des Drehmomentübertragungselements (1) eine Ruheposition eines auf die Außenlamellen (2,2a,2b,2c,2d) oder die Innenlamellen (3,3a,3b,3c) wirkenden Aktuators (7) geometrisch vorgibt.

12. Vorrichtung nach einem der Ansprüche 1 bis 11,
**dadurch gekennzeichnet , dass**
der Mindestabstand zwischen den zwei nebeneinander angeordneten Außenlamellen (2,2a,2b,2c,2d) und/oder zwischen den zwei nebeneinander angeordneten Innenlamellen (3,3a,3b,3c) durch Abtragen von Material an dem wenigstens einen Federelement (13) und/oder an dem wenigstens einen Anschlagelement (16) und/oder durch plastisches Verformen des wenigstens einen Federelements (13) und/oder des wenigstens einen Anschlagelements (16) nach Montage des wenigstens einen Federelements (13) an der Außenlamelle (2,2a,2b,2c,2d) oder der Innenlamelle (3,3a,3b,3c) eingestellt und über dem Umfang angeglichen wird.

13. Vorrichtung nach einem der Ansprüche 1 bis 12,
**dadurch gekennzeichnet , dass**
das wenigstens eine Federelement (13) bei geschlossenem Drehmomentübertragungselement (1) mit einer Federkraft in axialer Richtung auf zwei benachbarte Außenlamellen (2,2a,2b,2c,2d) und/oder Innenlamellen (3,3a,3b,3c) wirkt.

14. Vorrichtung nach einem der Ansprüche 1 bis 13,
**dadurch gekennzeichnet , dass**
wenigstens eine der Außenlamellen (2,2a,2b,2c,2d) und/oder Innenlamellen (3,3a,3b,3c) in einer nicht ebenen, insbesondere einer gewellten Form ausgebildet ist, wobei der axiale Abstand der Außenlamellen (2,2a,2b,2c,2d) oder der Innenlamellen (3,3a,3b,3c) voneinander über dem Umfang der Außenlamellen (2,2a,2b,2c,2d) oder der Innenlamellen (3,3a,3b,3c) variiert.

15. Vorrichtung nach einem der Ansprüche 1 bis 14,
**dadurch gekennzeichnet , dass**
eine zusätzliche Ausgleichsfeder (20) und/oder Reibung in einem auf die Außenlamellen (2,2a,2b,2c,2d) oder die Innenlamellen (3,3a,3b,3c) wirkenden Aktuator (7) den Abstand zwischen den zwei benachbarten Außenlamellen (2,2a,2b,2c,2d) und/oder zwischen den zwei benachbarten Innenlamellen (3,3a,3b,3c) auf den Mindestabstand begrenzt.

16. Vorrichtung nach einem der Ansprüche 1, 2 oder 4 bis 15,
**dadurch gekennzeichnet , dass**
die geometrisch definierten vorgespannten Längen und/oder auf das wenigstens eine Anschlagelement (16) und das wenigstens eine Abstützelement (16a) wirkende Federkräfte und/oder Federkennlinien von Federelementen (13), die zwischen zwei unterschiedlichen nebeneinander angeordneten Außenlamellen (2,2a,2b,2c,2d) und/oder zwischen zwei unterschiedlichen nebeneinander angeordneten Innenlamellen (3,3a,3b,3c) angeordnet sind, unterschiedliche Werte aufweisen.
